# EUROPEAN PATENT SPECIFICATION

(11) **EP 0 630 909 B1**
(45) Date of publication and mention of the grant of the patent: **14.10.1998**
(21) Application number: 94108395.8
(22) Date of filing: 31.05.1994
(51) Int. Cl.: C08F 2/06, C08F 2/16, C08F 291/00

(54) **Dispersion polymerization process**
Dispersionspolymerisationsverfahren
Procédé de polymérisation dans une dispersion

(30) Priority: 04.06.1993 US 71532
(43) Date of publication of application: 28.12.1994
(73) Proprietor: NALCO CHEMICAL COMPANY, Naperville Illinois 60563-1198 (US)
(72) Inventor: Ramesh, Manian, Naperville, Illinois 60565 (US); Howland, Christopher P., Aurora, Illinois 60506 (US); Cramm, Jeffrey R., Winfield, Illinois 60190 (US)
(74) Representative: Hartmann, Günter, Dr. Dipl.-Chem.

(56) References cited:
- EP-A- 0 183 466

## Description

### Technical Field of the Invention

The present invention is in the technical field of dispersion polymerization, and in particular dispersion polymerization of ethylenically-unsaturated monomers to produce water-soluble polymers. Especially, the present invention refers to a process for preparing a water-continuous dispersion of a water-soluble polymer that has not only a low end-product viscosity and permits rapid dissolution of the polymer in water but also provides control over the peak-in production viscosity parameter.

### Background of the invention

Water-soluble synthetic polymers are widely used as flocculating agents, dehydrating agents, papermaking chemicals, dispersants, soil improvers, and the like. The polymers are hydrophilic due to the present of ionic and/or highly-polar mer units within their polymeric structure. Water-soluble polymers may be anionic, cationic, amphoteric or polar-nonionic (such as polyacrylamide). Water-soluble polymers generally have weight average molecular weights of at least about 1,000, and commonly much higher, and of course do not have water solubility characteristics comparable to inorganic salts such as sodium chloride. Instead aqueous solutions of water-soluble polymers often are significantly viscous at polymer concentrations of even 5 or 10 weight percent. When these polymers are used in aqueous systems as flocculants, dispersants and the like, their use concentrations are typically very low, and often as low as several parts per million (ppm) or even parts per billion (ppb). When used at low concentrations the viscosity problems seen at higher polymer concentrations are, of course, not encountered.

An optimal polymerization technique is one that both is itself commercially practicable and produces a polymer in a form best suited for the commercial use of the polymer, including commercial factors such as storage and shipping of the polymer product. When the intended commercial application of the polymer is dependent at least in part on the polymer's water-solubility, the ease of solubilization/dispersion of the polymer in the use environment and/or polymer feed fluid is often a primary factor, but nonetheless generally not a factor that wholly outweighs other commercial practicalities. Commercial polymerization techniques generally include polymerization of monomers in solution, in suspension, held within an emulsion or in bulk (neat), each of which have advantages and disadvantages as to the polymerization process, the form in which the product is supplied, the extraneous materials contained in the polymer product and the ease of solubilization/dispersion required for use, discussed below.

Water-soluble polymers are seldom supplied as water solutions because of the relatively high viscosities of the solutions at relatively low polymer actives. If the viscosity of such a solution is sufficiently low for the intended dispersion, the polymer concentration is almost always too low for storage and shipment without extravagant costs and labor and energy outlays. Solution polymerization to provide a polymer solution without further processing is for this and other reasons not normally the polymerization technique of choice. Solution polymerization to provide a polymer in other than solution form requires either the solvent to be dried or stripped off or the polymer to be precipitated out of the solution, all of which require undesirable additional processing steps.

Polymers are sometimes supplied as dry powders (typically from about 85 to about 95 wt. percent actives), which concentrated form of a polymer reduces the storage/transport burdens, but requires additional processing, and the attendant time, labor and energy expenditures, at both the manufacturing and application ends. Dry polymer powders must be recovered from some type of vehicle or solvent by some type of drying or stripping process, and later require solubilization/dispersion processing before use. Not only is energy consumed in drying the polymer at elevated temperatures, but also the heating can bring about a three-dimensional polymer crosslinking, creating water-insoluble portions. Using a dry polymer to prepare, for instance, a polymer feed solution often requires a slow addition of the polymer to the water, followed by extended agitation and/or aging time periods. When the dry form is desired, a suspension polymerization technique will generally provide a polymer most easily recovered from the polymerization medium with the minimum of extraneous materials, but such suspension polymerization commonly uses as the hydrophobic solvent flammable substances such as cyclohexane, toluene and the like, and again a significant cost is required for the recovery energy and apparatus. The desire for a relatively unadulterated polymer is an underlying reason why polymers in dry form are nonetheless selected.

Polymerization without a solvent or fluid vehicle, for instance by bulk homogeneous polymerization or photopolymerization of a neat admixture of monomers, will produce a solid polymeric mass, and not a high surface area powder. Solid masses of polymers are of course even more difficult to solubilize/disperse. Bulk polymerization techniques are routinely limited to polymers used as the solid mass produced, and are not used for producing easily solubilized water-soluble polymers.

An emulsion that contains a polymer in its dispersed phase is often a convenient medium for a polymer-containing product. An emulsion frequently can hold a reasonably high concentration of a polymer while remaining fluid, and the large surface area of the dispersed phase helps the eventual solubilization or dispersion of the polymer. Moreover many polymers can be conveniently prepared by an emulsion polymerization, providing the desired emulsion form without further processing. Emulsion polymerization techniques of both the water-continuous type and the water-in-oil type are known.

A water-continuous emulsion polymerization uses an oil-in-water emulsifier with the polymer being formed in micelles. It will provide a substantially oil-free latex, but it is not suitable for most polymers within the water-soluble category because the starting monomers must be water-insoluble or only slightly water-soluble monomers. The resultant latex will also contain the oil-in-water emulsifier required for micelle formation and stability.

Water-in-oil latices of water-soluble polymers derived from water-soluble monomers are well known and are described, for instance, in U.S. Patent No. 3,284,393, (issued November 8, 1966, Vanderhoff et al.), and U.S. Patent No. Re. 28,474, (reissued July 8, 1974, D. R. Anderson and A. J. Frisque). The latices may be formed by oil-in-water polymerization or dispersion of preformed polymer in an oil-in-water emulision. Either method provides a water-in-oil latex or emulsion that can be stored and transported in latex form and subsequently introduced into a convenient quantity of water and inverted. The inversion releases the dispersed-phase polymer which is rapidly dispersed. The water-in-oil emulsions, and the polymerization or dispersion processes by which they are preferably produced, have met with great commercial success world-wide. Moreover, polymers of very high molecular weights, for instance weight average molecular weights exceeding five or ten million or higher can often be prepared using a water-in-oil emulsion polymerization technique, and water-soluble high molecular weight polymers have also met with world-wide commercial success, for instance in the water-treatment field.

One disadvantage inherent in the use of a polymer commercially supplied as a water-in-oil emulsion is that inversion of the emulsion into the intended feed solution or precursor thereto introduces not only the polymer, but also the oil and surfactants used in the emulsion polymerization. As noted above, the desire for a relatively unadulterated polymer is often a reason polymers in dry form are selected. The oil phase may comprise 20 weight percent or more of the latex. Isolation of the polymer from the oil, surfactants and any other nonaqueous components of the emulsion before use is generally not commercially reasonable because the additional processing would erase the advantages provided by this form of a polymer product. Another disadvantage in the use of a water-in-oil emulsion is that the inversion requires inverting agents (water-soluble surfactants), which increase the amount of extraneous substances being charged to polymer feed solution and thus to the aqueous or other commercial system in which the polymer is used. Inversion also requires additional processing equipment, typically at the site of use of the emulsion. The water-in-oil type emulsion can be flammable. The organic materials employed as the continuous oil phase are consumed although they generally are unnecessary to the use application, and this waste of an expensive raw material is a negative factor as to the cost efficiency of the water-in-oil type emulsion. The organic materials employed as the continuous phase can be undesirable impurities in the use system for environmental or other reasons, and there is an increasing commercial demand for oil-free polymers that are environmentally acceptable. These disadvantages in preparing and/or using a water-in-oil emulsion are increasing the commercial need for oil-free polymers that possess the advantages normally derived only from the water-in-oil emulsion form.

In a conventional precipitation polymerization in an aqueous salt solution, the polymer particles tend to adhere to each other as formed and thus enlarge into oversize masses, making handling very difficult. The resultant dispersion is stable only under pH conditions that suppress ion disassociation, and gels when a polymer's ionic groups are dissociated. An ionic polymer generally manifests its intended activity by ionic group disassociation and polymer chain extension, and does not have a satisfactory activity unless it is neutralized upon use or used in a solution at a high pH for anionic polymers or low pH for cationic polymers. Furthermore, it is difficult for this process to produce a polymer having a degree of ionization of 15 mole percent or less which is a most effective charge density for many applications.

A precipitation polymerization for preparing a water-soluble polymer is described in U.S. Patent No. 4,380,600, (April 19, 1983, Hosoda, et al.). It uses a water-soluble polymer (depositing polymer) as the precipitation medium. The precipitation effect of the depositing polymer is poor and thus a large amount of the depositing polymer is required to insolubilize the desired water-soluble polymer. As exemplified, the amount of water-soluble polymer used in the polymerization reaction mixture at times well exceeds the amount of polymer being formed thereby.

Highly advantageous processes for a dispersion polymerization to produce water-soluble polymers in dispersion form are disclosed in U.S. Patent No. 4,929,655, (issued May 29, 1990, Hisao Takeda and Mutsumi Kawano), U.S. Patent No. 5,006,590, (issued April 9, 1991, Hisao Takeda and Mutsumi Kawano), and European Patent Application No. 85308398.8, Publication No. 0 183 466, (published June 4, 1986, H. Takeda and M. Kawano). These processes are described below.

In U.S. Patent No. 4,929,655, water-soluble monomers, optionally including up to 95 mole percent (meth)acrylamide, are polymerized in a multivalent anionic salt aqueous reaction mixture containing a cationic water-soluble polymer (described in more detail therein). The multivalent anionic salt is an agent that causes the forming polymer to deposit from the solution. A multivalent alcohol, such as glycerin or ethylene glycol, is used at times to enhance the polymer deposition. The cationic water soluble polymer present in the reaction medium is described as a dispersant for the forming polymer particles, and it should be used in the amount of from 1 to 10 weight percent based on the total weight of the monomers. If the concentration of this polymer is below this 1 weight percent minimum, the polymer dispersion does not form. The concentration of the monomers in the polymerization reaction medium is described as suitably within the 5 to 30 percent by weight range. The preparations of polymer dispersion products having viscosities of from about 500 to about 2,900 mPa·s (cps) are exemplified, and in the latter instance the viscosity was reduced by a post-polymerization addition of further multivalent anionic salt. The time required for dissolution of these polymers in the preparation of 0.2 percent polymer solutions was only 20 minutes using these dispersions at 10 to 15 % polymer concentrations. In contrast, dissolution of a commercially available powdery polymer (95 % actives) to provide a 0.2 percent polymer solution required 60 minutes using the same agitation conditions.

In U.S. Patent No. 5,006,590, water-soluble monomers are polymerized in an aqueous solution of a multivalent anionic salt containing two water-soluble cationic polymers, one of which is insoluble in the multivalent anionic salt solution and one of which is soluble in the multivalent anionic salt solution (described in more detail therein). The polyvalent anionic salt is included to precipitate the forming polymer from solution and the precipitation is controlled to give fine particles of the polymer. (This salting-out is based on the "Hofmeister Series Principles".) At times a polyhydric alcohol such as glycerin or ethylene glycol will further improve the polymer precipitation. The two cationic water soluble polymers present in the reaction medium are described as together comprising a dispersant for the forming polymer particles, and they should each be used in the amount of from 1 to 10 weight percent based on the total weight of the monomers. The concentration of the monomers in the polymerization reaction medium is described as suitably within the 5 to 30 percent by weight range. The preparation of polymer dispersion products having viscosities of from about 500 to about 3,200 mPa·s (cps) (before post-polymerization additions of further multivalent anionic salt) are exemplified. The reduction of dispersion viscosity to 1000 mPa·s (cps) or lower by a post-polymerization addition of further multivalent anionic salt is preferred for workability.

The dispersion polymerizations disclosed in U.S. Patent No. 4,929,655 and U.S. Patent No. 5,006,590 provide advantages of the water-in-oil emulsion polymerizations discussed above, including rapid dissolution of the polymers when preparing dilute aqueous solutions thereof, without the disadvantages of a continuous oil phase, the use of a conventional surfactant for stability and the need for inversion to release the polymers from the dispersed phase. When the higher monomer concentrations are used, for instance concentrations of about 15, or 20 weight percent and higher, the in-production viscosity peaks are too high for normal production equipment. Lower monomer concentrations may relieve the in-production viscosity peak problems, but diminish the concentration of polymer in the product dispersion.

In European Patent Application No. 85308398.8 (EP-A-0 183 466) similar dispersion polymerization processes for preparing cationic, anionic and nonionic water-soluble polymers are described.

It is an object of the present invention to provide a dispersion polymerization that provides the advantages of the water-in-oil emulsion polymerizations discussed above, including a high polymer content and a rapid dissolution of the polymers when preparing dilute aqueous solutions thereof, without the disadvantages of a continuous oil phase, the use of a conventional surfactant for stability and the need for inverters to release the polymers from the dispersed phase. It is an object of the present invention to provide such a dispersion polymerization that does not undergo excessively high in-production viscosity peaks. It is an object of the present invention to provide such a dispersion polymerization process wherein the in-production viscosity peaks are sufficiently moderate to be compatible with normal production equipment. It is an object of the present invention to provide a dispersion polymerization process wherein excessively high in-production viscosity peak problems are relieved and thus the viscosity peaks do not diminish the concentration of polymer in the product dispersion. These and other objects of the present invention are discussed in detail below.

### Disclosure of Invention

The above objects are achieved according to the present invention by a polymerization process wherein a water-soluble polymer is prepared in the form of a water-continuous dispersion comprising the polymerization of water-soluble monomer in an aqueous reaction mixture wherein a portion of the monomer employed is fed to the reaction mixture after the polymerization reaction has been initiated. In more detail, the aqueous reaction mixture contains polyvalent anionic salt, at least one polymeric dispersant, optionally a low molecular weight polyhydric organic alcohol and optionally a preformed polymer seed, wherein the water-soluble monomer, polyvalent anionic salt, polymer dispersant and polyhydric organic alcohol (if any) are solutes of the aqueous reaction mixture, the preformed polymer seed (if any) is insoluble in the reaction mixture, preferably in fine particle dispersion form, and the polymer formed is insoluble in the reaction mixture at the concentration thereof formed during the polymerization.

Accordingly, the subject-matter of the present invention is a process for preparing a water-continuous dispersion of a water-soluble polymer that has not only a low end-product viscosity and permits rapid dissolution of the polymer in water but also provides control over the peak-in production viscosity parameter, the process comprising
polymerizing a water-soluble monomer in an aqueous reaction mixture, containing a polyvalent anionic salt, at least one polymeric dispersant, optionally a low molecular weight polyhydric organic alcohol and optionally a preformed polymer seed,
   wherein said water-soluble monomer, said polyvalent anionic salt, said polymeric dispersant and said polyhydric organic alcohol, if any, are solutes of said aqueous reaction mixture, and said preformed polymer seed, if any, is insoluble in said aqueous reaction mixture,
   wherein the water-soluble polymer formed during said polymerization is insoluble in the aqueous reaction mixture at the concentration thereof formed during the polymerization, and
   wherein a portion of said monomer is fed to said aqueous reaction mixture after said polymerization reaction has been initiated.

According to preferred embodiments of the process of the present invention:
at least 5 weight percent of said water-soluble monomer is present in said aqueous reaction mixture when said polymerization is initiated, the remainder of said monomer being added to said aqueous reaction mixture during said polymerization;
the water-soluble polymer formed during said polymerization has a weight average molecular weight of at least about 1,000;
the concentration of said water-soluble monomer in said aqueous reaction mixture at the time said polymerization process is initiated is from 3 to 30 weight percent based on the total weight of said aqueous reaction mixture at the time of said polymerization, and
the remainder of said monomer is added to said reaction mixture within the first half of the total polymerization reaction time period.

According to a further preferred embodiment the process of the present invention comprises
polymerizing said water-soluble monomer feed in an aqueous solution of said polyvalent anionic salt in the presence of a water-soluble polymeric dispersant which is soluble in said aqueous solution of a polyvalent anionic salt;
   wherein the conditions of said polymerization are sufficient to polymerize said monomer feed to a water-soluble polymer that is insoluble in said aqueous solution of a polyvalent anionic salt; and
   wherein only a portion of said monomer feed is present in said aqueous solution of a polyvalent anionic salt when said polymerization is initiated, the remainder of said monomer feed being added to said aqueous solution of polyvalent anionic salt during said polymerization process, and
   wherein said water-soluble polymeric dispersant and water-soluble polymer prepared by said polymerization process are both cationic polymers.

According to preferred embodiments of the above process:
at least 5 weight percent of said monomer feed is present in said aqueous solution of a polyvalent anionic salt at the time polymerization thereof is initiated, and at least 15 weight percent of said monomer feed is added to said aqueous solution of polyvalent anionic salt during said polymerization process;
the aqueous solution of polyvalent anionic salt contains at least a polymer-insolubility-threshold concentration of said monomer feed at the time said polymerization process is initiated whereby a concentration of said monomer feed that is equivalent to at least the minimum concentration of said monomer feed's polymeric reaction product at which precipitation of said polymeric reaction product will be seen in said environment of said aqueous solution of a polyvalent anionic salt at the time of said polymerization initiation;
the reaction mixture contains at least 3 weight percent of said monomer feed at the time said polymerization is initiated;
the concentration of said monomer in said aqueous solution of a polyvalent anionic salt at the time of polymerization initiation is from n to 20 n, wherein n is said polymer-insolubility-threshold concentration for such monomer feed in said reaction mixture; and
the portion monomer feed added to said aqueous solution of a polyvalent anionic salt after said initiation of said polymerization is added within the first half of the total polymerization reaction time period and is fully added within a time period of from 0.025 m to 0,25 m, wherein m is said total time period of said polymerization reaction.

According to an other preferred embodiment the process of the present invention for preparing a water-continuous dispersion of a water-soluble cationic polymer by polymerizing a water-soluble monomer feed to form a water-soluble cationic polymer in an aqueous polymerization mixture in which said water-soluble cationic polymer is not fully soluble, comprises:
feeding said water-soluble monomer to said polymerization reaction mixture by a first and a second technique,
said first technique being a batch technique comprising the addition of a portion of said water-soluble monomer to said aqueous polymerization mixture as an initial monomer feed before polymerization is initiated,
said second technique being a post-initiation technique whereby a portion of said water-soluble monomer is added to said aqueous polymerization mixture as a post-initiation monomer feed,
initiating said polymerization at a time when said initial monomer feed is present in said aqueous polymerization mixture,
   wherein said aqueous polymerization mixture is comprised of an aqueous solution of a polyvalent anionic salt,
   wherein said polymerization is carried out in said presence of a water-soluble cationic polymer which is soluble in said aqueous solution of a polyvalent anionic salt,
continuing said polymerization during the time said post-initiation monomer feed is added to said polymerization reaction mixture, and
terminating said polymerization when at least about 95 weight percent of said monomer has been converted to polymer.

According to preferred embodiments of the above process:
a polyhydric alcohol in the amount of from 0 to 10 parts by weight per hundred parts by weight of said total monomer feed is present in said aqueous polymerization mixture when polymerization is initiated;
the polyvalent anionic salt is present throughout said aqueous polymerization mixture in an amount of from 15 to 20 percent by weight based on the total weight of said reaction mixture at any given point during said polymerization reaction;
the polymeric dispersant is present in said aqueous polymerization mixture in an amount of from 2 to 10 parts by weight per 100 parts by weight of said total monomers feed, and has a weight average molecular weight of at least about 50,000;
the water-soluble monomer feed contains at least 5 mole percent of a cationic monomer of formula I 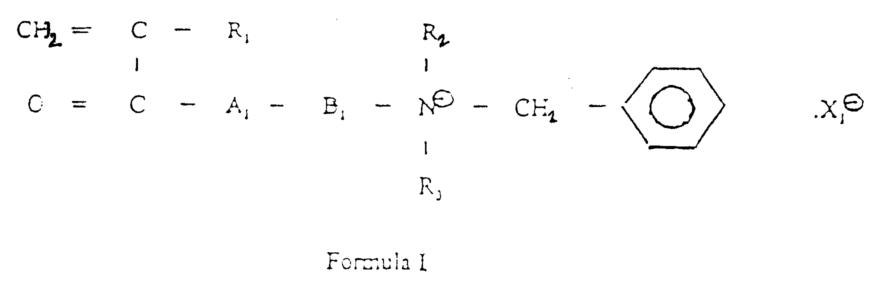 wherein
   R₁ is H or CH₃;
   R₂ and R₃ are each independently an alkyl group having 1 or 2 carbon atoms; A₁ is an oxygen atom or NH;
   B₁ is an alkylene group having from 2 to 4 carbon atoms or a hydroxypropylene group and
   X₁^{⊖} is a counter anion;
the polymeric dispersant is present in said aqueous polymerization mixture in an amount of from 2 to 10 parts by weight per 100 parts by weight of said water-soluble monomer feed;
the monomer feed is comprised of at least 5 mole percent of cationic monomer of said formula I and the balance of said monomer is acrylamide, methacrylamide, a cationic monomer other than said cationic monomer of said formula I or combinations thereof;
the polymeric dispersant is comprised of at least 20 mole percent of cationic mer units;
the polymeric dispersant contains at least 20 mole percent of cationic mer units represented by formula IIa 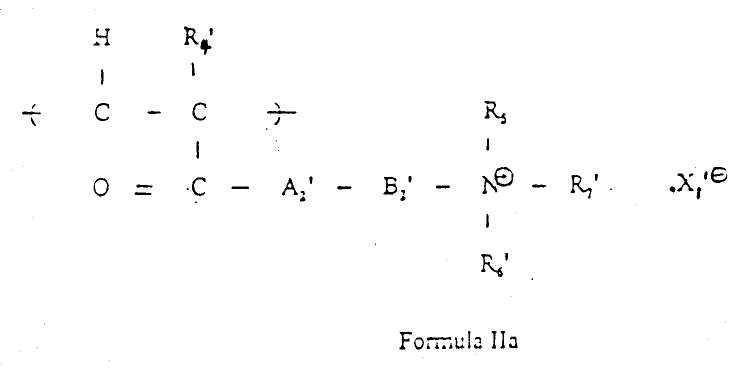 wherein
   R₄' is H oder CH₃;
   R₅' und R₆' are each an alkyl group having 1 or 2 carbon atoms;
   R₇' is a hydrogen atom or an alkyl group having 1 to 2 carbon atoms;
   A₂' is an oxygen atom or NH;
   B₂' is an alkylene group having from 2 to 4 carbon atoms or a hydroxypropylene group and
   X₁'^{⊖} is a counter anion; and
the monomer feed is from 15 to 45 percent by weight based on the total weight of said polymerization reaction mixture at the time said polymerization is terminated, excluding post-polymerization additives.

### Preferred Embodiments of the Invention

The enormous advantages of the unique dispersion polymerizations disclosed in U.S. Patent No. 4,929,655, U.S. Patent No. 5,006,590 and European Patent Application No. 85308398.8 (EP-A-0 183 466) are lessened by the cost of extraordinary production equipment required, and the energy consumed thereby, to produce a dispersion having a high concentration of end-product polymer actives. The unique advantages of these processes are also lessened when alternatively a 15 or 20 weight percent limitation is placed on monomer concentration to avoid such in-production viscosity problems which are experienced even in custom-made reactors. When monomer concentrations of about 15, or 20, weight percent and higher are employed in these dispersion processes, the in-production viscosity peaks are too high for normal commercial production equipment. The cost of commercial-scale equipment that can operate despite the extreme in-production viscosity peaks is inordinate and itself severely diminishes the commercial value of these dispersion processes. The alternative use of lower monomer concentrations of course reduces the polymer production rate per unit production capacity and lowers the concentration of polymer in the product dispersion. The multivalent anionic salt concentration can be increased to reduce viscosity after completion of the polymerization, but not during the dispersion polymerization. An excessive concentration of the multivalent anionic salt will result in rapid precipitation of the cationic water-soluble polymer. The higher rate of precipitation in comparison to the rate of stabilization will lead to agglomeration of the particles and will result in gel formation.

The present invention in broad embodiment is a process for preparing an aqueous dispersion of water-soluble polymer by a dispersion polymerization technique that reduces the peak in-production viscosity parameter without loss of any of the advantages of these known dispersion polymerization methods. The present invention so alleviates the in-production viscosity peaks that standard commercial production equipment can be used despite a high monomer charge. In this process a water-soluble monomer feed is polymerized in an aqueous solution of a polyvalent salt, the polymerization is carried out in the presence of a water-soluble polymer which is soluble in the aqueous solution of polyvalent anionic salt, and preferably at least 10 or 15 parts by weight per hundred parts by weight of the water-soluble monomer feed is present in the polymerization reaction mixture when the polymerization is initiated, the remainder being added during the polymerization, incrementally or otherwise.

The polymer formed during the process of the present invention precipitates from, or deposits out of, the polyvalent anionic salt-containing reaction mixture and by such deposition forms a dispersion of end-product polymer. At the time of polymerization initiation and thereafter during the polymerization reaction, a polymer which is insoluble in the aqueous solution of a polyvalent salt, but is a nonetheless water-soluble, optionally may be present as a polymer seed dispersion. Instead when the polymer is formed from an initial monomer charge a polymer seed dispersion is formed *in situ* . The process of the present invention, however, does not result in an ever-accumulating deposit of polymer on polymer. Such a mechanism would inevitably lead to excessively high polymer particle sizes. It is believed that in the present process monomer and/or forming polymer chains diffuse into the polymer particles and polymerize therein, rather that polymerizing within the aqueous phase of the reaction mixture and then depositing therefrom, but the present invention is not limited to this mechanism theory. Instead the ultimate advantageous results provided by the present invention have been demonstrated.

In preferred embodiment, the present invention is a dispersion polymerization of ethylenically-unsaturated monomers to produce water-soluble polymers. The polymers produced are water-soluble due to the presence of ionic and/or highly-polar mer units within their polymeric structure. These water-soluble polymers may be anionic, cationic, amphoteric or polar-nonionic (such as polyacrylamide). These water-soluble polymers generally have weight average molecular weights of at least about 1,000, and commonly much higher. Aqueous solutions of these water-soluble polymers often are significantly viscous (viscosities of 2000 mPa·s (cps) Brookfield or higher) at polymer concentrations of even 5 or 10 weight percent. The present invention provides a polymerization technique for preparing water-soluble polymers that is both is itself commercially practicable and produces a polymer in a form best suited for the commercial use of the polymer, including commercial factors such as storage and shipping of the polymer product. The water-soluble polymer dispersions provided by the process of the present invention also provide ease of solubilization/dispersion of the polymer in the use environment and/or polymer feed fluid, sans extraneous materials contained in the polymer product or whose addition is required thereafter.

The present invention provides a dispersion polymerization having the advantages of the water-in-oil emulsion polymerizations discussed above, including a high polymer content and a rapid dissolution of the polymers when preparing dilute aqueous solutions thereof, without the disadvantages of a continuous oil phase, the use of a conventional surfactant for stability and the need for inverters to release the polymers from the dispersed phase. The present invention provides such a dispersion polymerization that does not undergo excessively high in-production viscosity peaks. The present invention provides such a dispersion polymerization process wherein the in-production viscosity peaks are sufficiently moderate to be compatible with normal production equipment and thus the in-production viscosity peaks do not diminish the concentration of polymer in the reaction mixture or the product dispersion.

The present invention in a broad embodiment is a process for preparing an aqueous dispersion of water-soluble polymer that has not only a low end-product viscosity and permits rapid dissolution of the polymer in water, which polymer may have a high molecular weight, which process most significantly provides control over the peak in-production viscosity parameter. In this process:
(1) a water-soluble monomer feed is polymerized in an aqueous solution of a polyvalent anionic salt;
(2) the polymerization is carried out in the presence of a water-soluble polymer which is soluble in the aqueous solution of polyvalent anionic salt;
(3) the polymerization parameters are sufficient to polymerize the monomer feed to a polymer that is insoluble in the aqueous solution of polyvalent anionic salt; and
(4) most significantly, only a portion of the monomer feed is present in the polymerization reaction mixture when the polymerization is initiated, the remainder being added after polymerization initiation and before polymerization termination (during the polymerization process).

In broad embodiment, at least 5 parts by weight per hundred parts by weight of the total monomer feed is present in the reaction mixture at the time polymerization thereof is initiated, and at least 15 parts by weight per hundred parts by weight of the total monomer feed is added to the reaction mixture after aforesaid polymerization initiation. In preferred embodiment, at least 10 parts by weight per hundred parts by weight of the total monomer feed is present in the reaction mixture at the time polymerization thereof is initiated, and at least 20 parts by weight per hundred parts by weight of the total monomer feed is added to the reaction mixture after aforesaid polymerization initiation.

In another preferred embodiment, the reaction mixture contains at least a polymer-insolubility-threshold concentration of the monomer to be polymerized at the time polymerization thereof is initiated. By "polymer-insolubility-threshold concentration" is meant herein a concentration of the monomer that is equivalent to the minimum concentration of its polymeric reaction product at which precipitation of such polymeric reaction product will be seen in the environment of the given aqueous polyvalent anionic salt solution at the time of the polymerization initiation. Such polymer-insolubility-threshold amount preferably is determined for a polymer of substantially the same mer units, substantially the same mole ratio of mer units and substantially the same weight average molecular weight, or intrinsic viscosity ("IV") or reduced specific viscosity ("RSV"), as the polymer that is being prepared. A polymer deviating to a degree of about 10 percent as to one or more of these parameters is believed within the "substantially same" category. The environment of the given aqueous polyvalent anionic salt solution at the time of the polymerization initiation includes the composition parameters, such as the type and concentration of solutes, colloidal or solid materials in the solution, and physical parameters such as pressure and temperature. The presence of a polymer-insolubility-threshold concentration of monomer in the reaction mixture at the time of polymerization initiation will provide a concentration of polymeric reaction product that is at least close to its solubility limit in the aqueous polyvalent anionic salt solution when the polymerization has proceeded to about 30 percent conversion of monomer to polymer, without any further addition of monomer (although the present invention does not exclude the addition of further monomer before such degree of conversion has occurred). The presence of a polymer-insolubility-threshold concentration of monomer in the reaction mixture at the time of polymerization initiation is, as noted above, a preferred minimum, and neither an absolute minimum nor in any given polymerization process necessarily the optimal initiation condition.

In some preferred embodiments, the polymer prepared by the process of the present invention has a polymer-insolubility-threshold concentration of 3 weight percent or less, and the reaction mixture contains at least 3 weight percent of the monomer to be polymerized at the time polymerization thereof is initiated. This 3 weight percent minimum is comparable to, or higher than, the polymer-insolubility-threshold concentration for the polymer being prepared. For such preferred embodiments, and other embodiments, the monomers may be selected to provide a polymer of a desired polymer-insolubility-threshold concentration in a given reaction mixture, or the reaction mixture components can be selected so that the desired polymer has a polymer-insolubility-threshold concentration within the desired range.

There is not believed to be any definitive minimum polymer-insolubility-threshold concentration and instead the constraints thereon are more apt to be the requirements that the monomer(s) be soluble in the aqueous polyvalent anionic salt solution at their concentration therein at polymerization initiation and that their concentration at polymerization initiation be sufficiently high to provide a reasonably efficient free radical polymerization. (Free radical polymerizations are chain reactions that are initiated by the formation of free-radical monomers which react with other monomers. A growing polymer chain has a free radical end group, and the growth of the polymer chain is terminated when that end group reacts with another free radical. This chain-reaction polymerization mechanism is well known to those of ordinary skill in the art, and whether or not a reasonably efficient free radical polymerization is provided is easily determined by known methods or theoretically by those of ordinary skill in the art.) A polymer having an extremely low polymer-insolubility-threshold concentration, for instance of about 0.1 weight percent or less, is likely to include some mer units derived from a monomer that has an undesirably low solubility in the aqueous polyvalent anionic salt solution in question.

In other preferred embodiments, the concentration of the monomer(s) in the reaction mixture at the time of polymerization initiation is from about n to about 20 n, wherein n is the polymer-insolubility-threshold concentration for such monomer(s) in the given reaction mixture.

In other preferred embodiments, the concentration of the monomer(s) in the initial reaction mixture at the time of polymerization initiation is from about 3 to about 30, or 35, weight percent regardless of the value of the polymer-insolubility-threshold concentration for such monomer(s) in the given reaction mixture. In more preferred embodiments, the concentration of the monomer(s) in the reaction mixture at the time of polymerization initiation is from about 6 to about 25, or 30, weight percent regardless of the value of the polymer-insolubility-threshold concentration for such monomer(s) in the given reaction mixture.

The reaction mixture of course must contain sufficient monomer and/or growing polymer chains to maintain the polymerization reaction from the time of initiation to the time of termination. There is no specific monomer concentration value minimum that must be maintained in the reaction mixture after the polymerization is initiated provided the polymerization does not terminate prematurely. The monomer not included in the reaction mixture at the time of polymerization initiation (the "post-initiation monomer feed") may be added thereto in small increments, for instance dropwise over an extended time period, or it may be added to the in-production reaction mixture as fast the substantially homogeneous dispersion of the monomer therein permits. A bulk addition of the monomer that interferes with the dispersion of monomer into and throughout the reaction mixture for any reason would be undesirable.

The addition of the post-initiation monomer feed may begin immediately after polymerization initiation, or at a later time. In preferred embodiment the post-initiation monomer feed is added within the first half of the total polymerization reaction time period. In more preferred embodiment the post-initiation monomer feed is added within the second quarter of the total polymerization reaction time period.

In more preferred embodiment the post-initiation monomer feed is added within the first half of the total polymerization reaction time period and is fully added within a time period of from about 0.025m to about 0.25 m, wherein m is the total time period of the polymerization reaction, and in further preferred embodiment the post-initiation monomer feed is added within the first half of the total polymerization reaction time period and is fully added within a time period of from about 0.05m to about 0.1m. In more preferred embodiment the post-initiation monomer feed is added within the second quarter of the total polymerization reaction time period and is fully added within a time period of from about 0.025m to about 0.25 m, wherein m is the total time period of the polymerization reaction, and in further preferred embodiment the post-initiation monomer feed is added within the second quarter of the total polymerization reaction time period and is fully added within a time period of from about 0.05m to about 0.1 m.

The primary advantage of the process of the present invention is that it can reduce the bulk viscosity of the reaction mixture during the polymerization from an unmanageably high viscosity to a viscosity that is reasonably low, without an impossibly high loading of the polyvalent salt. The end-product, and the precursor reaction mixture after the forming polymer begins to deposit out of solution, must remain stable dispersions. The reaction mixture before completion of the polymerization must contain a sufficient amount of the soluble polymer to provide a dispersing effect on the forming polymer deposits and to prevent uncontrolled polymer particle growth and/or polymer particle agglomeration. The required presence of a soluble polymer in the reaction mixture prevents an unlimited concentration of the polyvalent anionic salt. The above preferred embodiments as to the time and speed of the addition of the post-initiation monomer feed enhance the bulk-viscosity reduction/control advantages of the present invention.

The water-soluble monomer feed is thus charged to the polymerization reaction mixture by two techniques. The first technique is the addition of a portion of the water-soluble monomer feed to the polymerization reaction mixture before polymerization is initiated so that it is present in the reaction mixture when polymerization is initiated. This first technique is essentially a batch technique, regardless of whether the addition is in bulk or incrementally, and that portion of the water-soluble monomer feed is referred to herein as the "initial monomer feed". The second technique a post-initiation technique, regardless of whether the addition is in bulk or incrementally, and that portion of the water-soluble monomer feed is referred to herein as the "post-initiation monomer feed".

In preferred embodiment the mole ratio of monomers within the initial monomer feed and the post-initiation monomer feed are substantially the same (the mole percentage values of each monomer specie not varying more than about 10 or 15 percent between the initial monomer feed and the post-initiation monomer feed). The mole ratio of monomers within the initial monomer feed and the post-initiation monomer feed need not be substantially the same and in fact there need not be an identity of monomer species between the initial monomer species and the post-initiation monomer feed. As the degree of variation as to mole ratios and/or monomer species increases, the degree of heterogeneousness of the polymer produced increases, particularly when the post-initiation monomer feed is commenced at a time later than immediately after polymerization initiation. Heterogeneous polymer products are not routinely commercially desirable, but can be made by the process of the present invention, particularly when the extremes of polymer fractions have similar solubility properties in the reaction mixture.

At the time of polymerization initiation, a water-soluble polymer that is insoluble in the aqueous solution of a polyvalent anionic salt may optionally be present as a preformed polymer seed, and when such preformed polymer seed is present it preferably is present in the form of a stable dispersion having a particle size comparable to, or less than, the maximum particle size of the polymer deposits formed by the process of the present invention. It is nonetheless a preferred embodiment to eliminate such optional component and instead use as a "polymer seed" the polymer that is formed *in situ* from an initial monomer charge. When a preformed polymer seed is added to the polymerization reaction mixture prior to polymerization initiation, in preferred embodiment it is added to the polymerization reaction mixture as fine particles in a dispersed state, particularly in an aqueous solution of a polyvalent anionic salt.

The water-soluble polymer insoluble in an aqueous solution of a polyvalent anion salt is preferably a product prepared by the process of the present invention because the dispersions prepared according to the present invention have the desired low viscosity and fine particle size desired of such preformed polymer seed. Nonetheless a preformed polymer seed may be added as a viscous solution, which *in situ* deposits from the reaction mixture to form the preformed polymer seed. The characteristics of the preformed polymer seed (mer units, mole ratios, molecular weight, degree of branching or cross-linking (parameters) may be, but need not always be, comparable to that of the polymer being made by the present process. When a preformed polymer seed is included in the reaction mixture, it preferably is used in amounts within the same range as that preferred for the soluble polymeric dispersant, that is, an amount of about 3 to 10 parts by weight per 100 parts by weight of the monomers (total) used.

The presence of a polyhydric alcohol such as glycerin (glycerine or glycerol), ethylene glycol, propylene glycol, pentaerythritol, sorbitol, polyethylene glycol, polypropylene glycol and the like, often further enhances the deposit or precipitation of the polymer formed in the process of the present invention as fine particles that form a stable dispersion. Such a polyhydric alcohol is one having a molecular weight of no more than about 1,000 and preferably no more than about 500, and thus do not include polymeric species such as polyvinyl alcohol. The reaction mixture may contain such a polyhydric alcohol in the amount of from 0 to about 10 parts by per hundred parts by weight of the total monomer feed.

The polymerization of the present invention is preferably carried out by the use of a conventional water-soluble free-radical initiator. It is particularly preferable to use a water-soluble azo compound such as 2,2'-azobis (2-amidinopropane) hydrochloride or 2,2'-azobis(N,N-dimethyleneisobutyramidine) hydrochloride.

The addition of various salts to the end-product polymer dispersion (after the completion of the polymerization) is effective in lowering the viscosity of the polymer dispersion and in producing a dispersion in which the specific gravity of the continuous aqueous phase is comparable or equal to that of the dispersed polymer particles. Such comparable specific gravities enhance long-term dispersion stability. It is preferable for handling that the viscosity of the end-product dispersion be 1000 mPa·s (cps) Brookfield or below, and the addition salt generally will drop the dispersion viscosity to such range while it is effective in inhibiting the separation of the polymer from the dispersion by providing comparable specific gravities to the two dispersion phases. Such post-polymerization additions of salt do not have the drawbacks noted above as to excessively high salt levels during the polymerization, or at least only to a lesser degree.

The multivalent anionic salt is included in the reaction mixture to deposit the forming, and otherwise soluble, polymer. The salt preferably is a sulfate or a phosphate, and typical examples of these salts include ammonium sulfite, sodium sulfate, magnesium sulfate, aluminum sulfate, ammonium hydrogenphosphate, sodium hydrogenphosphate and potassium hydrogenphosphate. The salt is used in an amount sufficient to precipitate the forming polymer from the reaction mixture during the polymerization, and preferably such deposits start forming at least during the first quarter of the total polymerization time. In preferred embodiment, the salt is present throughout the polymerization reaction in the reaction mixture in the amount of 15 to about 20 percent by weight based on the total weight of the reaction mixture at any given point during the polymerization reaction. When the concentration of the salt solution is less than 15 weight percent, the polymer being formed may remain to an undesirable degree soluble in the reaction mixture which consequently takes the form of a viscous aqueous polymer solution rather than a fluid dispersion. In more preferred embodiment, the amount of salt present during the polymerization is about 16 to about 18 weight percent same basis.

The polymeric dispersant used in the present invention preferably is a reasonable high molecular weight organic polymer which is nonetheless soluble in the aqueous salt solution, and it is preferably used in an amount of from about 2 to about 10 parts by weight per 100 parts by weight of the total monomers employed. In preferred embodiment the polymeric dispersant has a weight average molecular weight of at least about 50,000 or 100,000, and more preferably at least about 5,000,000. This dispersant is believed to have no insolubilizing effect on the forming polymer. This polymeric dispersant should generally be of the same charge as the polymer being formed. For instance, when a cationic polymer is being prepared, the polymeric dispersant will generally have an overall cationic charge, and when an anionic polymer is being prepared, the polymeric dispersant will generally have all overall anionic charge.

Generally the entire water phase, except the amounts that are added as diluent with the post-initiation monomer feed (which normally would be not more than the amount of the monomer itself in the feed), the entire amount of polyvalent anionic salt (except post-polymerization additions), and the entire amounts of the polymeric dispersant, the preformed polymer seed and the polyhydric alcohol, are included in the reaction mixture before polymerization initiation. If for any reason it is desirable to add a portion of the polymeric dispersion after polymerization initiation, in preferred embodiment the polymeric dispersant should nonetheless always be present in the reaction mixture in the amount of from about 2 to about 10 parts by weight per 100 parts by weight of the monomers charged to the reaction mixture at any time during the polymerization reaction. If for any reason it is desirable to add a portion of the other reaction mixture components after polymerization, generally no more than about 10 or 15 parts by weight per hundred parts by weight of such a reaction mixture component should be withheld from the reaction mixture until after polymerization initiation. In the instance of the initiator, or for instance a monomer stabilizer, it is reasonable and at times may be preferred to add one or more aliquots thereof after the polymerization initiation, and such post-initiation additions may even be 2 or 3 times the initial charge or more. Another reaction mixture component that modifies the forming polymer and may be added in significant proportion after polymerization initiation is a chain-transfer agent, such as a low molecular weight (below about 500) alcohol, such as isopropanol or benzyl alcohol.

For purposes of determining time frames with respect to total polymerization time, a polymerization is considered here, and in the technical field generally, to be completed/terminated, about one hour after a 95 weight percent conversion of monomer to polymer has been reached.

The following Formulas I, Ia, II and IIa are referred to below in the discussion of preferred embodiments of the invention wherein the process of the present invention is a dispersion polymerization to form a water-soluble cationic polymer. The structures defined by Formulas I and II are quaternary ammonium salt monomers, as follows: 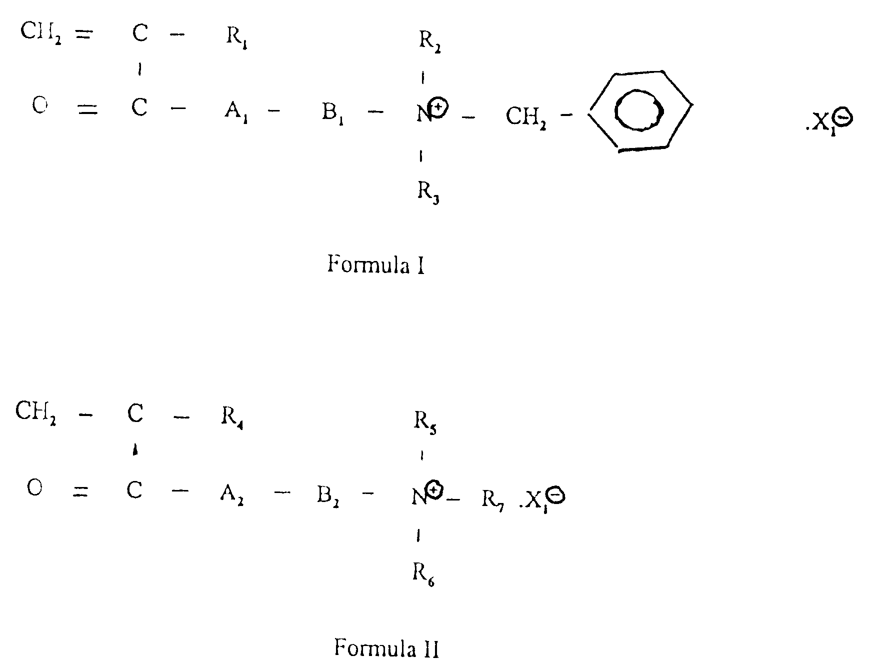 wherein R₁ and R₄ are each H or CH₃; R₂, R₃, R₅ and R₆ are each an alkyl group having 1 or 2 carbon atoms; R₇ is a hydrogen atom or an alkyl group having 1 to 2 carbon atoms; A₁ and A₂ are each an oxygen atom or NH; B₁ and B₂ are each an alkylene group having from 2 to 4 carbon atoms or a hydroxypropylene group and X₁^{⊖} and X₂^{⊖} are each a counter anion.

The structures defined by Formulas Ia and IIa are quaternary ammonium salt mer units derived from the monomers defined in Formulas I and II respectively, as follows: 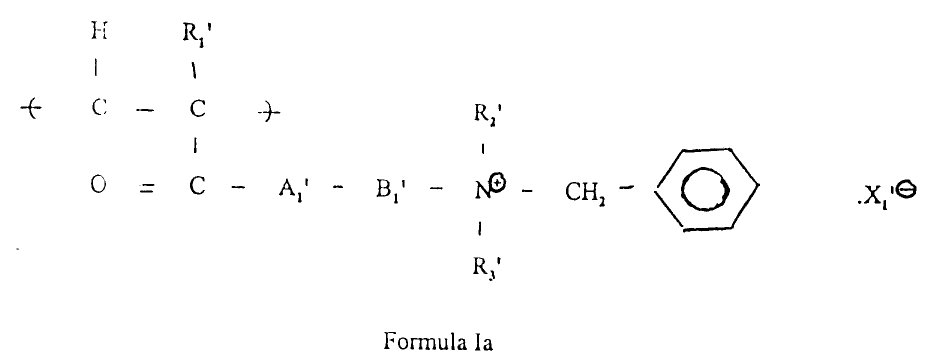 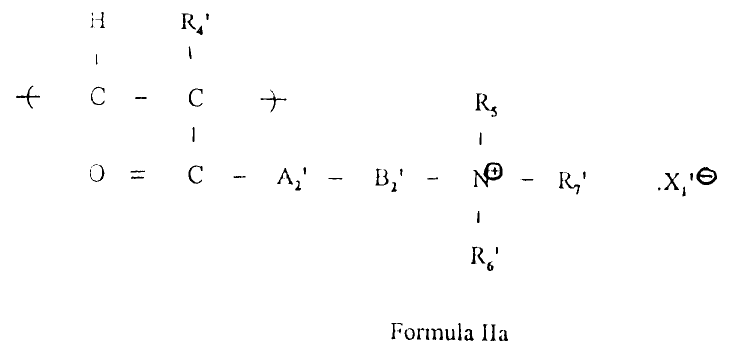 wherein R₁' and R₄' are each H or CH₃; R₂', R₃', R₅' and R₆' are each an alkyl group having 1 or 2 carbon atoms; R₇' is a hydrogen atom or an alkyl group having 1 to 2 carbon atoms; A₁' and A₂' are each an oxygen atom or NH; B₁' and B₂' are each an alkylene group having from 2 to 4 carbon atoms or a hydroxypropylene group and X₁'^{⊖} and X₂'^{⊖} are each a counter anion.

The present invention in preferred embodiment is a process for preparing an aqueous dispersion of water-soluble cationic polymer that has not only a low end-product viscosity and permits rapid dissolution of the polymer in water, but also may have a high molecular weight, which process governs the peak in-production viscosity parameter. In this preferred process a water-soluble monomer feed (more preferably containing at least 5 mole percent of a cationic monomer of Formula I above) is polymerized in an aqueous solution of a polyvalent anionic salt, the polymerization is carried out in the presence of a water-soluble cationic polymer which is soluble in the aqueous solution of polyvalent anionic salt, and at least 25 parts by weight of the water-soluble monomer feed per hundred parts by weight of the water-soluble cationic polymer which is soluble in the aqueous solution of polyvalent anionic salt is present in the polymerization reaction mixture when the polymerization is initiated, the remainder being added during the polymerization, and at times incrementally during the polymerization reaction.

At the time of polymerization initiation, a water-soluble cationic polymer (which preferably contains at least 5 mole percent of cationic mer units represented by Formula Ia) which is insoluble in the aqueous solution of a polyvalent anionic salt, optionally may be present, or instead such a polymer is formed *in situ* from an initial monomer charge. When it is added to the polymerization reaction mixture prior to polymerization initiation as a preformed polymer seed, in preferred embodiment it is added to the polymerization reaction mixture as fine particles in a dispersed state, particularly in an aqueous solution of a polyvalent anionic salt.

The water-soluble monomer feed is thus charged to the remainder of the polymerization reaction mixture by two techniques. The first technique is the addition of a portion of the water-soluble monomer feed to the polymerization reaction mixture before polymerization is initiated so that it is present in the reaction mixture when polymerization is initiated. This first technique is essentially a batch technique, regardless of whether the addition is in bulk or incrementally, and that portion of the water-soluble monomer feed is referred to herein as the initial monomer feed. The second technique a post-initiation technique, regardless of whether the addition is in bulk or incrementally, and that portion of the water-soluble monomer feed is referred to herein as the post-initiation monomer feed. In more preferred embodiment, the initial monomer feed contains at least 5 mole percent of cationic monomer units represented by Formula I and, when employed. the preformed polymer seed contains at least 5 mole percent of cationic mer units represented by Formula Ia.

Formula Ia, as shown above, is of course the structure of a polymer mer unit that would be derived from the polymerization of the monomer of Formula I. For simplicity when discussing a characteristic potentially applicable to both the monomer and the mer unit, the terminology of "monomer/mer" and "Formula I/Ia" is used at times below.

In further preferred embodiment, the water-soluble cationic polymer soluble in an aqueous solution of a polyvalent anionic salt, and the preformed polymer seed when employed, is used in an amount of about 0.1, or 1, to about 10 parts by weight per 100 parts by weight of the total water-soluble monomer feed employed (the initial monomer feed and the post-initiation monomer feed combined, referred to at times herein as "the combined monomer feed").

In another preferred embodiment, the combined monomer feed and/or the preformed polymer seed is comprised of at least 5 mole percent of cationic monomer/mer units represented by the Formula I/Ia and the balance selected from among (meth)acrylamide, other cationic monomer/mer units discussed below, including cationic monomer/mer units represented by the Formula II/IIa and mixtures thereof.

In preferred embodiment, the cationic monomer/mer units represented by the Formula I/Ia is one selected from among the benzylated quaternary ammonium salts of dialkylaminoalkyl (meth)acrylate and dialkylaminoalkyl (meth)acrylamide. These include, without limitation, the benzylated quaternary ammonium salts of dimethylaminoethylacrylate, dimethylaminohydroxypropylacrylate, dimethylaminopropylacrylamide dimethylaminoethylmethacrylate, dimethylaminohydroxypropylmethacrylate, dimethylaminopropylmethacrylamide and mixture thereof. In another preferred embodiment the monomer/mer of Formula I/Ia is acryloyloxyethyldimethylbenzylammonium chloride, methacryloyloxyethyldimethylbenzylammonium chloride or mixtures thereof.

The water-soluble cationic polymer soluble in the aqueous solution of a polyvalent anionic salt (referred to herein at times as "the dispersant" or "the polymeric dispersant") contains a sufficient density of cationic mer units to be soluble in the aqueous solution of polyvalent salt at the concentration used therein. In more preferred embodiment the polymeric dispersant is comprised of at least 20 mole percent of cationic mer units, preferably of the quaternary ammonium salt type, such as the quaternized salts of mer units of N-alkylsubstituted aminoalkyl esters of acrylic acid and others. As mentioned above, the combined monomer feed, and when present the preformed polymer seed, may contain monomer/mer units other than as defined above in Formula I/IA, which also preferably are of the quaternary ammonium salt type, such as the quaternized salts of mer units of N-alkylsubstituted aminoalkyl esters of acrylic acid and others. Such quaternary ammonium salt type, suitable for the polymeric dispersant and/or the combined monomer feed, and when present the preformed polymer seed, include, for example:
1. the quaternized salts of reaction products of a polyamine and an acrylate type compound prepared, for example, from methyl acrylate and ethylenediamine;
2. (methacryloyloxyethyl)trimethyl ammonium chloride;
3. diallylmethyl(beta-propionamido)ammonium chloride, (beta-methacryloyloxyethyl)trimethylammonium methyl sulfate;
4. quaternized vinyllactam;
5. the quaternized salt of vinylbenzyltrialkylamines such as, for example, vinylbenzyltrimethylammonium chloride;
6. quaternized salt of vinyl-heterocyclic monomers having a ring nitrogen, such as (1,2-dimethyl-5-vinylpyridinium methyl sulfate), and (2-vinyl-2-imidazolinium chloride);
7. dialkyldiallylammonium salt including diallyldimethyl ammonium chloride ("DADMAC"); and
8. methacrylamidopropyltrimethylammonium chloride ("MAPTAC").
An epichlorohydrin/dimethylamine (epi/DMA) cationic polymer may be particularly useful as the polymeric dispersant. In certain preferred embodiments, the polymeric dispersant and/or the combined monomer feed, and when present the preformed polymer seed, contain up to 50 mole percent of cationic mer units such as those enumerated above and/or others, and in more preferred embodiment up to about 30, or 40, mole percent thereof. A preferred cationic mer unit for any of these species, but particularly for the polymeric dispersant, is DADMAC. A preferred polymeric dispersant is substantially comprised of acrylamide and DADMAC.

In other embodiments, the polymeric dispersant contains at least 20 mole percent of cationic mer units represented by Formula IIa above. The combined monomer feed, and when present the preformed polymer seed, may also include cationic monomer/mer units of Formula II/IIa above.

In other preferred embodiments, the cationic monomer/mer units represented by the Formula II/IIa is one selected from among salts and methylated quaternary ammonium salts of dialkylaminoalkyl (meth)acrylate and dialkylaminoalkyl (meth)acrylamide. These include, without limitation, the salts and methylated quaternary ammonium salts of dimethylaminoethylacrylate, dimethylaminopropylacrylamide, dimethylaminohydroxypropyacrylate, dimethylaminoethylmethacrylate, dimethylaminopropylmethacrylamide, dimethylaminohydroxypropymethacrylate and mixtures of them. In other preferred embodiments, the cationic monomer/mer units represented by the Formula II/IIa is acryloyloxyethyltrimethylammonium chloride, methacryloyloxyethyltrimethylammonium chloride or mixtures thereof.

In certain preferred embodiments, the polymeric dispersant is wholly comprised of mer units of Formula IIa.

In preferred embodiment the polyvalent anionic salt concentration of the aqueous salt solution is at least 15 parts by weight per hundred parts by weight of water. The polyvalent anionic salt is preferably selected from among the sulfate salts, the phosphate salts and mixtures thereof and more preferably the sulfate salts, particularly ammonium sulfate.

In certain preferred embodiments, a salt is additionally dissolved in the dispersion after the completion of the polymerization (post-polymerization addition).

In certain preferred embodiments, the specific gravity of the polymer in the dispersion is equal to that of the aqueous solution.

In preferred embodiment, the viscosity of the end-product polymer dispersion is no more than about 1000 mPa·s (cps), and preferably such viscosity is attained without any post-polymerization addition of salt. In further preferred embodiment, the in-production peak viscosity of the polymerization reaction mixture does not exceed about 20,000 mPa·s (cps).

In preferred embodiment, the combined monomer feed (initial monomer feed and post-initiation monomer feed) based on the total weight of the polymerization reaction mixture, excluding post-polymerization additives, is from about 15, or 20, to about 40, or 45, percent by weight or higher. The excessively high in-production peak viscosities are primarily encountered at monomer charges of at least 15, and more commonly at least 20 weight percent, based on the total weight of the polymerization reaction mixture, excluding post-polymerization additives. A process having a high concentrations of monomer charge is particularly preferred herein because more concentrated polymer products provide the greatest production and shipping cost benefits and have the least environmental impact, including without limitation a lesser energy and adjuvant raw material consumption. A process having a high concentration of monomer charge is also preferred herein because processes having more concentrated monomer charges tend to develop higher viscosities, particularly in-production viscosities, and thus the advantages of the present invention in reducing the in-production viscosity peaks are particularly important. The present invention in broad embodiment does not, however, exclude the use of the present process when the total monomer charge is less than 15 weight percent, based on the total weight of the polymerization reaction mixture, excluding post-polymerization additions. At such lower monomer charges the in-production viscosity peak control provided by the present invention will also be seen, and at times may be a significant advantage.

In preferred embodiments, a water-soluble azo free-radical initiator is used as a polymerization initiator. In more preferred embodiments, the polymerization initiator is selected from among 2,2'-azobis(2-amidinopropane) hydrochloride, 2,2'-azobis(N,N'-dimethyleneisobutyramidine) hydrochloride and mixtures thereof.

In preferred embodiment, the particle size of the polymer in the end-product dispersion is 25 µm (micrometers) or less.

In the following Examples, unless expressly indicated otherwise therein, all polymerization reactions were conducted using a reactor having a five-neck-head equipped with a stirrer (half-moon and three-pitch blade turbines), nitrogen purge tube, thermometer, condenser, thermocouple and stopper. The stiffer blades were positioned about one cm below the liquid level to provide consistent stirring at the top of the reaction mixture. The reactor was first purged with nitrogen to replace the oxygen-containing air therein, the reaction mixture was also purged with nitrogen after it was added to the reactor by bubbling nitrogen there through, and a flow of nitrogen to the reactor was continued throughout the polymerization time period and any post-polymerization period in which monomer residuals were diminished. To this reactor were added the initial batch ingredients. The reactor contents were heated to the reaction temperature and then the initiator was added to initiate the polymerization. The reaction mixture was stirred from at least the time heating was started, and thereafter throughout the entire polymerization and post-polymerization time periods. The stirring speed was from about 400 to about 600 rpm as specified in the specific Examples. The polymerization reaction began only upon initiator addition, which in all instances was after the elevated reaction temperature was reached (even when the initiator charge, or first initiator charge, is listed with the initial batch reaction mixture ingredients). The reaction temperature was maintained throughout the polymerization time period, unless specified otherwise in the description. The post-initiation monomer feeds of monomers were all at reasonably consistent rates over time period during which the polymerization reactions were proceeding ("in-production" time periods). Post-polymerization additions were made after the reaction mixtures were cooled to about ambient room temperature, and no polymerizations were continuing at these times. Except for the reactions of the Comparative Examples that were abandoned before completion, as specified in the specific Comparative Examples, all polymerization reactions proceeded through at least about 98 weight percent conversion of monomer to polymer. As indicated in the specific Example, at times benzyl alcohol was added as a chain transfer agent, and its addition would reduce the weight average molecular weight of the polymer from that which would form in the absence of the chain transfer agent. Also at times the azo initiator and/or the monomer stabilizer (Versene) are added in significant aliquots after the polymerization reaction was initiated, but it is believed that in none of the Examples was the polymerization prematurely terminated and then restarted. The polymers prepared in the Examples and Comparative Examples were all of such solubility characteristics that they had polymer-insolubility-thresholds of no more than 3 weight percent in the described aqueous reaction mixtures. Although only a single type of polyvalent anionic salt is present in the reaction mixture prior to polymerization completion, combinations of polyvalent anionic salts of course can be used. While the specific types of monomers used in the Examples are readily polymerizable at the reaction temperatures employed, different monomers or combinations of monomers may be best polymerized at lower or higher reaction temperatures, and the selection of an appropriate reaction temperature is within the ordinary skill of a person in the art. Generally polymerization temperatures within the range of from about 25 °C to about 65 °C are sufficient for free radical polymerization of most ethylenically-unsaturated monomers. An appropriate stirring rate for either laboratory-size polymerizations or commercial production polymerizations is from about 400 rpm to about 1000 rpm.

### Example 1

A 19.5 weight percent actives semi-batch dispersion polymerization of a acrylamide/DMAEA.BCQ copolymer (90/10 mole ratio) was conducted using a 90/10 mole ratio of the monomers both in the initial monomer feed and in the post-initiation monomer feed. The initial reaction mixture comprised of 21.21 grams of poly-DMAEA.MCQ, 311.06 grams of DI water, 137.47 grams of a 48.6 wt. percent acrylamide aqueous solution, 55.91 grams of a 50.0 wt. percent DMAEA.BCQ aqueous solution, 7.07 grams of glycerol, 155.50 grams of ammonium sulfate, 0.30 grams of Versene and 4.712 grams of a polymer seed. The polymer seed used was a 15 weight percent actives dispersion of a acrylamide/DMAEA.BCQ copolymer (90/10 mole ratio) prepared by a batch polymerization using similar auxiliary constituents. The reaction mixture was heated to 40 °C, and upon reaching that temperature 2.00 grams of a 1 wt. percent V-044 azo initiation was added and then a post-initiation monomer feed comprised of 137.47 grams of a 48.6 wt. percent acrylamide aqueous solution, 55.91 grams of a 50.0 wt. percent DMAEA.BCQ aqueous solution and 0.30 grams of Versene was added at a substantially consistent addition rate during the first two hours of the reaction while maintaining the 40 °C reaction temperature. The polymerization was continued for an additional three hours while maintaining the 40 °C reaction temperature, which provided about a 30 wt. percent conversion of monomers to polymer. Immediately after this five-hour polymerization period, 2.00 grams of a 1 wt. percent aqueous solution of an azo initiator were added to minimize monomer residuals. To reduce the bulk viscosity of the resultant reaction mixture as well as to stabilize the dispersion polymer against hydrolytic degradation, post-polymerization additions of 62.22 grams of sodium sulfate and 7.07 grams of glacial acetic acid respectively were made. Over the entire course of the polymerization and post-polymerization treatments the bulk viscosity caused the reaction mixture to climb no higher than 2,54 cm (1-inch) up the stirring rod shaft. This maximum bulk viscosity developed during the reaction period represents a maximum viscosity of about 2000 mPa·s (cps) Brookfield. The final reaction mixture was a low viscosity (approximately 800 mPa·s (cps)), milky-white fluid. The polymer produced was isolated by water dilution and determined to have an Intrinsic Viscosity of 13.9 dl/g and a Reduced Specific Viscosity of 14.72 in 0.125 molar sodium nitrate solution. The concentration of monomer residuals were determined by liquid chromatography to be about 49.8 ppm acrylamide, less than 100 ppm DMAEA.BCQ and about 100 ppm DMAEA.MCQ.

### Example 2

A 24.4 weight percent actives semi-batch dispersion polymerization of a acrylamide/DMAEA.BCQ copolymer (90/10 mole ratio) was conducted using a 90/10 mole ratio of the monomers both in the initial monomer feed and in the post-initiation monomer feed. The initial reaction mixture comprised of 22.27 grams of a (3462-196?) of poly-DMAEA.MCQ, 213.38 grams of DI water, 171.83 grams of a 48.6 wt. percent acrylamide aqueous solution, 69.88 grams of a 50.0 wt. percent DMAEA.BCQ aqueous solution, 7.07 grams of glycerol, 155.50 grams of ammonium sulfate, 0.30 grams of Versene, 0.30 grams boric anhydride, 4.712 grams of a polymer seed. The polymer seed used was a 15 weight percent actives dispersion of a acrylamide/DMAEA.BCQ copolymer (90/10 mole ratio) prepared by a batch polymerization using similar auxiliary constituents. The reaction mixture was stirred at about 800 rpm throughout the entire polymerization and post-polymerization time periods. The reaction mixture was heated to 40 °C, and upon reaching that temperature 2.00 grams of a 1 wt. percent VA-044 azo initiator was added and then a post-initiation monomer feed comprised of 171.83 grams of a 48.6 wt. percent acrylamide aqueous solution, 69.88 grams of a 50.0 wt. percent DMAEA.BCQ aqueous solution and 0.30 grams of Versene was added at a substantially consistent addition rate (which was about 1.4 ml per minute) during the first one hour 50 minutes of the reaction while maintaining the 40 °C reaction temperature. The polymerization was continued for an additional three hours and 10 minutes while maintaining the 40 °C reaction temperature, which provided about a 30 wt. percent conversion of monomers to polymer. Immediately after this five-hour polymerization period, 2.00 grams of a 1 wt. percent aqueous solution of an azo initiator were added to minimize monomer residuals. To reduce the bulk viscosity of the resultant reaction mixture, post-polymerization additions of 62.22 grams of sodium sulfate and 7.07 grams of glacial acetic acid were made. Over the entire course of the polymerization and post-polymerization treatments the peak bulk viscosity developments caused the torque on the stirring rod to increase from about 15 dyne-cm to about 20 dyne-cm at T_{1.5hr} (1.5 hours after the polymerization was commenced) and to 35 dyne-cm at T_{1.75hr} . These maximum bulk viscosity develop occurred during the polymerization stage and represent respectively viscosities of about 600 and 2000 mPa·s (cps) Brookfield. The final reaction mixture was a thick viscosity (approximate 1000 mPa·s (cps) Brookfield) white fluid. When a 1 wt. percent polymer actives solution was prepared from the reaction mixture by dilution with DI water, by stirring at 100 rpm drive for 15 to 20 minutes. The polymer produced was isolated by dilution with DI water and determined to have an Intrinsic Viscosity of 12.9 dl/g and Reduced Specific Viscosities of 15.2, 13.9 and 13.8 at 0.045, 0.0225 and 0.015 polymer concentrations respectively, in 0.125 molar sodium nitrate solution. The concentration of monomer residuals were determined by liquid chromatography to be about 437 ppm acrylamide, less than 100 ppm DMAEA.BCQ and less than 100 ppm DMAEA.MCQ.

### Example 3

A dispersion polymerization similar to that described in Example 2 was conducted except a higher proportion of monomer was added as the post-initiation feed than as the initial charge. This 24.4 weight percent actives semi-batch dispersion polymerization of a acrylamide/DMAEA.BCQ copolymer (90/10 mole ratio) was run using a 90/10 mole ratio of the monomers both in the initial monomer feed and in the post-initiation monomer feed. The initial reaction mixture comprised of 27.27 grams of a 22 weight percent active solution of poly-DMAEA.MCQ, 143.00 grams of DI water, 7.07 grams of glycerol, 85.91 grams of a 48.6 wt. percent acrylamide aqueous solution, 34.94 grams of a 50.0 wt. percent DMAEA.BCQ aqueous solution, 7.07 grams of glycerol, 110.50 grams of ammonium sulfate, 0.30 grams of Versene and 3.00 grams of a 1 wt. percent aqueous solution of VA-044. The reaction mixture was stirred at about 800 rpm throughout the entire polymerization and post-polymerization time periods. The reaction mixture was heated to 40 °C, and upon reaching that temperature the nitrogen purge was continued for 30 minutes, then 2.00 grams of a 1 wt. percent VA-044 azo initiation was added and then a post-initiation monomer feed comprised of 270.43 grams of a 48.6 wt. percent acrylamide aqueous solution and 110.00 grams of a 50.0 wt. percent DMAEA.BCQ aqueous solution was added at a substantially consistent addition rate (which was about 3.8 ml per minute) during the first two hours of the reaction while maintaining the 40 °C reaction temperature. At about 2.5 hours from the start of the polymerization, 16 grams of DI water was added to thin the reaction mixture viscosity, which water addition decreased the reaction mixture viscosity from greater than 2,000 mPa·s (cps) Brookfield to about 2,000 mPa·s (cps) Brookfield, after which an additional 40 grams of DI water was added. At about 3 hours from the start of the polymerization, 20 grams of ammonium sulfate was added which decreased the reaction mixture viscosity to a torque reading on the stirring means of about 1700 dyne-cm. At about 3.5 hours from the start of the polymerization, an additional 20 grams of ammonium sulfate was added which decreased the reaction mixture viscosity to a torque reading on the stirring means of about 935 dyne-cm after a further 0.5 hour of reaction time. The polymerization was continued for an additional one hour while maintaining the 40 °C reaction temperature, which provided about a 99.3 wt. percent conversion of monomers to polymer. Immediately after this five-hour polymerization period, 2.00 grams of a 1 wt. percent aqueous solution of an azo initiator were added to minimize monomer residuals. To reduce the bulk viscosity of the resultant reaction mixture, post-polymerization additions of 25.00 grams of sodium sulfate and 7.07 grams of glacial acetic acid were made. The final reaction mixture was a milky white fluid with small particles of grain size visible. The polymer produced was isolated by dilution with water and determined to have an Intrinsic Viscosity of 15.72 dl/g. The concentration of monomer residuals were determined by liquid chromatography to be about 2110 ppm acrylamide and less than 200 ppm DMAEA.BCQ.

### Example 4

A semi-batch dispersion polymerization similar to that described in Example 1 was conducted except a higher proportion of monomer (about 58 wt. percent) was added as the post-initiation feed rather than in the initial charge. This approximately 20 weight percent actives semi-batch dispersion polymerization of a acrylamide/DMAEA.BCQ copolymer (90/10 mole ratio) was run using a 90/10 mole ratio of the monomers both in the initial monomer feed and in the post-initiation monomer feed. The initial reaction mixture batch was comprised of 21.21 grams of a 22 weight percent active solution of poly-DMAEA.MCQ, 308.27 grams of DI water, 103.10 grams of a 48.2 wt. percent acrylamide aqueous solution, 41.94 grams of a 80 wt. percent DMAEA.BCQ aqueous solution, 155.50 grams of ammonium sulfate, 0.30 grams of Versene, and 47.12 grams of a 15 wt. percent actives polyacrylamide-co-DMAEA.BCQ seed polymer. This initial reaction mixture was stirred at about 400 rpm throughout the entire polymerization and post-polymerization time periods. The reaction mixture was heated to 40 °C, and upon reaching that temperature the nitrogen purge of the reaction mixture was continued for 30 minutes, then 2.00 grams of a 1 wt. percent VA-044 azo initiator was added to initiate the polymerization. One hour after the polymerization began, a post-initiation monomer feed comprised of 182.37 grams of a 48.2 wt. percent acrylamide aqueous solution and 46.36 grams of a 80 wt. percent DMAEA.BCQ aqueous solution were added at a substantially consistent addition rate over the next 1.0 hour of the polymerization reaction. No further DI water or salt was added to thin the reaction mixture viscosity. The polymerization was continued for a total polymerization time period of about seven hours. To reduce the bulk viscosity of the resultant reaction mixture, post-polymerization additions of 62.22 grams of sodium sulfate and 7.07 grams of glacial acetic acid were made. The final reaction mixture was a white low-viscosity (approximate 80 mPa·s (cps)) fluid. The polymer produced was isolated by dilution with water and determined to have an Intrinsic Viscosity of 14 dl/g. The concentration of monomer residuals were determined by liquid chromatography to be about 1100 ppm acrylamide and less than 100 ppm DMAEA.BCQ.

### Example 5

A 26.8 weight percent actives semi-batch dispersion polymerization of an acrylamide/DMAEA.BCQ/DMAEA.MCQ terpolymer (65/25/10 mole ratio) was conducted using a 65/25/10 mole ratio of the monomers both in the initial monomer feed and in the post-initiation monomer feed. The combined monomer feed was divided 2:1 between the initial monomer feed and the post-initiation monomer feed. No preformed polymer seed was used. The reaction was carried out at 45 °C with stirring at 400 rpm and several exotherms up to about 48 °C were seen. The post-initiation monomer feed was added at a substantially consistent addition rate during the first 3 hours of the polymerization and the second charge of the initiator was added at the end of the fifth hour of polymerization. The polymerization was continued for 8 hours total, after which the reaction mixture was cooled to room temperature and the post-polymerization additions were made. When the final dispersion product was filtered through a 48 mesh sieve, 12 weight percent thereof did not pass through due to a minor agglomeration formation. The maximum bulk viscosity developed during the reaction period was about 1900 mPa·s (cps) Brookfield. The final reaction mixture was a low viscosity (approximate 86 mPa·s (cps)), milky-white fluid. The polymer produced had an Intrinsic Viscosity of 17.6 dl/g and a Reduced Specific Viscosity of 21.9 in 0.125 molar sodium nitrate solution. The concentration of monomer residuals were about 600 ppm acrylamide, and less than 100 ppm DMAEA.BCQ and DMAEA.MCQ. The reaction mixture components are set forth below in Table 1.

**Table 1**

| Ingredient | Ingredient Component(s) | Amount (grams) |
|---|---|---|
| | | |

| Initial Charge | | |
|---|---|---|
| Dispersant | Poly-DMAEA.MCQ actives | 4.942 |
| " | Water | 19.768 |
| | DI Water | 242.535 |
| Polyvalent salt | Ammonium sulfate | 75.630 |
| | Glycerin | 2.970 |
| | Benzyl alcohol | 0.020 |
| Acrylamide (100%) | Acrylamide actives | 33.570 |
| DMAEA.BCQ (80%) | DMAEA.BCQ actives | 50.093 |
| " | Water | 12.523 |
| DMAEA.MCQ (79.7%) | DMAEA.MCQ actives | 14.436 |
| " | Water | 3.677 |
| Initiator | V-5O (1%) | 0.990 |

| In-production Charge | | |
|---|---|---|
| Acrylamide (100%) | Acrylamide actives | 16.785 |
| DMAEA.BCQ (80%) | DMAEA.BCQ actives | 25.044 |
| " | Water | 6.261 |
| DMAEA.MCQ (79.7%) | DMAEA.MCQ actives | 7.218 |
| " | Water | 1.838 |
| Initiator | V-5O (1%) | 0.990 |
| Total Reaction Mixture Prior To Post-Polymerization Additions: | | 519.290 |

| Post-polymerization Charge | | |
|---|---|---|
| Salt | Ammonium sulfate | 34.995 |
| | Acetic acid | 4.935 |
| Total Reaction Mixture After Post-Polymerization Additions: | | 559.220 |

### Comparative Example A

An attempt to conduct a 29.6 weight percent actives batch dispersion polymerization of an acrylamide/DMAEA.BCQ/DMAEA.MCQ terpolymer (65/25/10 mole ratio) was made. A preformed polymer seed was used to provide a concentration of polymer actives of 31.4 wt. percent in the reaction mixture before post-polymerization additions. The reaction was carried out at 45 °C with stirring at 400 rpm. The reaction mixture gelled 90 minutes after initiation and the reaction was then abandoned. The bulk viscosity which had developed at the time the reaction was abandoned was greater than 500,000 mPa·s (cps) Brookfield at 90 minutes after the initiation. The reaction mixture components, to the extent charged before the reaction was terminated, and in some instances percentage thereof based on reaction mixture, are set forth below in Table 2.

**Table 2**

| Ingredient | Ingredient Component(s) | Amount (grams) | Wt. % |
|---|---|---|---|
| | | | |

| Initial Charge | | | |
|---|---|---|---|
| Preformed Polymer Seed | PolyDMAEA.MCQ | 10.000 | |
| " | Water | 40.000 | |
| Dispersant dispersion | PolyAcAm/DMAEA.BCQ/DMAEA.MCQ | 73.970 | |
| | DI Water | 256.980 | |
| Polyvalent salt | Ammonium sulfate | 95.710 | |
| | Glycerin | 10.000 | |
| | Benzyl alcohol | 0.020 | |
| Acrylamide (48.4%) | Acrylamide actives | 102.569 | 10.9% |
| " | Water | 109.351 | |
| DMAEA.BCQ (80%) | DMAEA.BCQ actives | 149.920 | 15.9% |
| " | Water | 37.476 | |
| DMAEA.MCQ (79.7%) | DMAEA.MCQ actives | 43.389 | 4.6% |
| " | Water | 11.051 | |
| | Versene | 0.400 | |
| Initiator | V-5O (1%) | 2.000 | |
| Total Reaction Mixture Prior To Polymerization Abandonment: | | 942.836 | |

### Example 6

A 29.84 weight percent actives semi-batch dispersion polymerization of an acrylamide/DMAEA.BCQ/DMAEA.MCQ terpolymer (65/25/10 mole ratio) was conducted using a 65/25/10 mole ratio of the monomers both in the initial monomer feed and in the post-initiation monomer feed. The combined monomer feed was divided 70:30 between the initial monomer feed and the post-initiation monomer feed. No preformed polymer seed was used. The reaction was carried out at 45 °C with stirring at 400 rpm. The post-initiation monomer feed was added at a substantially consistent addition rate over a period of 90 minutes, 2.5 hours after the beginning of the polymerization, and the second charge of the initiator was added at the end of the fifth hour of polymerization. The polymerization was continued for 8 hours total, after which the reaction mixture was cooled to room temperature and the post-polymerization additions were made. The maximum bulk viscosity developed during the reaction period was about 10,000 mPa·s (cps) Brookfield. The final reaction mixture had an approximate viscosity of about 110 mPa·s (cps) Brookfield. The polymer produced had an Intrinsic Viscosity of 21.02 dl/g and a Reduced Specific Viscosity of 17.14 in 0.125 molar sodium nitrate solution. The concentration of monomer residuals were about 1400 ppm acrylamide, and less than 100 ppm DMAEA.BCQ and DMAEA.MCQ. The reaction mixture components are set forth below in Table 3.

**Table 3**

| Ingredient | Ingredient Component(s) | Amount (grams) |
|---|---|---|
| | | |

| Initial Charge | | |
|---|---|---|
| Dispersant dispersion | Poly-DMAEA.MCQ actives | 15.000 |
| " | Water | 60.000 |
| | DI Water | 371.210 |
| Polyvalent salt | Ammonium sulfate | 140.000 |
| | Glycerin | 7.500 |
| | Benzyl alcohol (4% aq. soln.) | 0.500 |
| Acrylamide (47%) | Acrylamide actives | 78.210 |
| " | Water | 88.200 |
| DMAEA.BCQ (80%) | DMAEA.BCQ actives | 116.700 |
| " | Water | 29.180 |
| DMAEA.MCQ (79.7%) | DMAEA.MCQ actives | 33.640 |
| " | Water | 8.570 |
| | Versene | 0.300 |
| Initiator | V-SO (1%) | 1.500 |

| In-production Charge | | |
|---|---|---|
| Acrylamide (47%) | Acrylamide actives | 33.553 |
| " | Water | 37.837 |
| DMAEA.BCQ (80%) | DMAEA.BCQ actives | 50.088 |
| " | Water | 12.522 |
| DMAEA.MCQ (79.7%) | DMAEA.MCQ actives | 14.442 |
| " | Water | 3.678 |
| Initiator | V-SO (1%) | 2.500 |
| | Versene | 0.200 |
| Total Reaction Mixture Prior To Post-Polymerization Additions: | | 1,105.330 |

| Post-polymerization Charge | | |
|---|---|---|
| Salt | Sodium sulfate | 55.000 |
| | Acetic acid | 10.000 |
| Total Reaction Mixture After Post-Polymerization Additions: | | 1,170.330 |

### Example 7

A 29.9 weight percent actives semi-batch dispersion polymerization of an acrylamide/DMAEA.BCQ/DMAEA.MCQ terpolymer (65/25/10 mole ratio) was conducted using a 65/25/10 mole ratio of the monomers both in the initial monomer feed and in the post-initiation monomer feed. The combined monomer feed was divided about 62:38 between the initial monomer feed and the post-initiation monomer feed. No preformed polymer seed was used. The reaction was carried out at 48 °C with stirring at 400 rpm. The post-initiation monomer feed was started at the end of the first 2.5 hour polymerization period, and this feed was added at a substantially consistent addition rate over 30 minutes while the polymerization continued. The second charge of the initiator was added after the post-initiation monomer feed was charged, and the third charge of the initiator was added at the end of the fifth hour of polymerization. The polymerization was continued for 7 hours total, after which the reaction mixture was cooled to room temperature and the post-polymerization additions were made and the end-product reaction mixture was stirred for additional 15 minutes. The final reaction mixture had an approximate viscosity of about 120 mPa·s (cps) Brookfield. The polymer produced had an Intrinsic Viscosity of 16.27 dl/g and a Reduced Specific Viscosity of 20.18 in 0.125 molar sodium nitrate solution. The concentration of monomer residuals were about 1100 ppm acrylamide, and less than 100 ppm DMAEA.BCQ and DMAEA.MCQ. The reaction mixture components are set forth below in Table 4.

**Table 4**

| Ingredient | Ingredient Component(s) | Amount (grams) |
|---|---|---|
| | | |

| Initial Charge | | |
|---|---|---|
| Dispersant dispersion | Poly-DMAEA.MCQ | 15.000 |
| " | Water | 60.000 |
| | DI Water | 371.210 |
| Polyvalent salt | Ammonium sulfate | 140.000 |
| | Glycerin | 7.500 |
| | Benzyl alcohol | 0.500 |
| Acrylamide (47%) | Acrylamide actives | 78.213 |
| " | Water | 88.197 |
| DMAEA.BCQ (80%) | DMAEA.BCQ actives | 116.704 |
| " | Water | 29.176 |
| DMAEA.MCQ (79.7%) | DMAEA.MCQ actives | 33.641 |
| " | Water | 8.569 |
| | Versene | 0.300 |
| Initiator | V-5O (1%) | 0.500 |

| In-production Charge | | |
|---|---|---|
| Acrylamide (47%) | Acrylamide actives | 50.243 |
| " | Water | 56.657 |
| DMAEA.BCQ (80%) | DMAEA.BCQ actives | 70.936 |
| " | Water | 17.734 |
| DMAEA.MCQ (79.7%) | DMAEA.MCQ actives | 20.260 |
| " | Water | 5.160 |
| Initiator | V-5O (1%) | 1.500 |
| Initiator | V-5O (1%) | 1.500 |
| | Versene | 0.200 |
| Total Reaction Mixture Prior To Post-Polymerization Additions: | | 1,173.700 |

| Post-polymerization Charge | | |
|---|---|---|
| Salt | Sodium sulfate | 55.000 |
| | Acetic acid | 10.000 |
| Total Reaction Mixture After Post-Polymerization Additions: | | 1,238.700 |

100 grams of the end-product dispersion provided by the reaction of this Example was filtered through a 40 mesh filter screen. 99.18 grams passed through this screen indicating that the weight percent of agglomerated substance in the end-product dispersion was only 0.8 weight percent. The torque on the stirring, and the reaction mixture viscosity (using the #3 spindle at 12 rpm), versus time after the initiation of the polymerization are set forth below in Table 5.

**Table 5**

| Time (hr;min) | Torque (dyne-cm) | Viscosity in mPa·s (cps Brookfield) |
|---|---|---|
| 0:00 | 120 | 12 |
| 0:20 | 158 | |
| 0:45 | 282 | |
| 0:59 | 352 | |
| 1:30 | 682 | |
| 2:00 | 920 | |
| 2:10 | 21400 | 5600 |
| 2:30 | 21400 | |
| 3:00 | 27200 | |
| 3:15 | 27900 | 13000 |
| 4:00 | 22700 | |
| 5:00 | 20080 | 8200 |
| 7:00 | 1062 | 3200 |
| 7:20 | 502 | 120 |

### Comparative Example B

A 20 weight percent actives batch dispersion polymerization of an acrylamide/DMAEA.BCQ/DMAEA.MCQ terpolymer (65/25/10 mole ratio) was conducted. No preformed polymer seed was used. The reaction was carried out at 45 °C with stirring at 400 rpm, the reaction being initiated at this intended reaction temperature with the addition of the first aliquot of initiator. A second aliquot of initiator was added after four hours of reaction, and then the polymerization was continued for an additional eight hours. The polymerization was conducted for 12 hours total, after which the reaction mixture was cooled to room temperature and the post-polymerization additions were made and the end-product reaction mixture was stirred for additional 15 minutes. The final reaction mixture had an approximate viscosity of about 120 mPa·s (cps) Brookfield. The polymer produced had an Intrinsic Viscosity of 17.1 dl/g and a Reduced Specific Viscosity of 20.1 in 0.125 molar sodium nitrate solution. The concentration of monomer residuals were about 1700 ppm acrylamide, less than 100 ppm DMAEA.BCQ and DMAEA.MCQ. The reaction mixture components and the torque on the stirring means at time intervals, and at times the reaction mixture viscosity (using the #3 spindle at 12 rpm), versus time after the initiation of the polymerization are set forth below in Tables 6 and 7.

**Table 6**

| Comparative Example B | |
|---|---|
| Ingredients | Amount (grams) |
| | |

| Initial Charge | |
|---|---|
| Poly(DMAEA.MCQ) 20% actives | 15 |
| DI Water | 146.2 |
| Ammonium sulfate | 45.9 |
| Glycerol | 1.8 |
| Acrylamide (100% actives) | 20.8 |
| DMAEA.BCQ (80% actives) | 38 |
| DMAEA.MCQ (80% actives) | 11.04 |
| V-5O (1%) | 0.6 |
| Total Reaction Mixture At Time of Maximum Viscosity: | 279.34 |

| At Reaction Time = 4 Hours | |
|---|---|
| V-50 (1%) | 0.6 |

| At Rection Time = 12 Hours | |
|---|---|
| Ammonium Sulfate | 21.3 |
| Acetic Acid | 2.96 |
| Total Reaction Mixture | 304.2 |

**Table 7**

| Comparative Example B | | |
|---|---|---|
| Time (hr;min) | Torque (dyne-cm) | Viscosity in mPa·s (cps BF) |
| 0:00 | 380 | 12 |
| 0:5 | 412 | |
| 0:10 | 450 | |
| 0:22 | > 3,820 | > 500,000 |
| 0:35 | > 4,020 | (exceeds Brookfield range) |
| 0:45 | > 3,820 | |
| 0:55 | > 3,426 | |
| 1:05 | > 3,463 | |
| 1:40 | 2,018 | 16,000 |
| 2:00 | 1,926 | |
| 3:00 | 1,930 | |
| 4:00 | 1,868 | |
| 12:00 | 928 | 5,600 |
| 12:20 | 462 | 120 |

### Comparative Examples C and D

Two attempts to conduct a 30 weight percent actives batch dispersion polymerization of an acrylamide/DMAEA.BCQ/DMAEA.MCQ terpolymer (65/25/10 mole ratio) were made. In Comparative Example C the reaction was carried out at 50 °C with stirring at 400 rpm, the reaction being initiated at this reaction temperature with the additions of an initiator. After 1 hour 35 minutes of polymerization time, the reaction mixture viscosity rose to higher than 100,000 mPa·s (cps Brookfield). The reaction mixture gelled 15 minutes later, and then after another 10 minutes the torque on the stirring means was so great that the stirrer motor burned out. The polymerization reaction was abandoned at that time. In Comparative Example D the polymerization of Comparative Example C above was repeated except that the initial aliquot of initiator was decreased by about 40 percent, the DI water charge was slightly decreased and the reaction was conducted at 45 °C. The reaction mixture of this Comparative Example D also gelled and the reaction was abandoned after 2 hours of polymerization due to the gel formation. The reaction mixture constituents charged before the reactions were terminated, and the torque on the stirring means and reaction mixture viscosity (using the #3 spindle at 12 rpm) versus time after the initiation of the polymerizations, are set forth below in Tables 8 and 9 below for Comparative Examples C and D.

**Table 8**

| Comparative Examples C and D | | |
|---|---|---|
| Ingredients | Amount (grams) | |
| | | |

| Initial Charge | | |
|---|---|---|
| | Comp. Ex. C | Comp. Ex. D |
| Poly(DMAEA.MCQ) 20% actives | 75 | 75 |
| DI Water | 400 | 399 |
| Ammonium sulfate | 110 | 110 |
| Glycerol | 9 | 9 |
| Acrylamide (100% actives) | 104.01 | 104.01 |
| DMAEA.BCQ (80% actives) | 190.17 | 190.17 |
| DMAEA.MCQ (80% actives) | 54.32 | 54.32 |
| V-5O (1%) | 5 | 3 |
| Total Reaction Mixture Before Abandonment: | 947.5 | 944.5 |

**Table 9**

| Comparative Examples C and D | | | | |
|---|---|---|---|---|
| Time (hr;min) | Comparative Example C | | Comparative Example D | |
| | Torque (dyne-cm) | Viscosity in mPa·s (cps BF) | Torque (dyne-cm) | Viscosity in mPa·s (cps BF) |
| 0:00 | 240 | 16 | 522 | 15 |
| 0:5 | | | 546 | |
| 0:10 | | | 586 | |
| 0:15 | 388 | | | |
| 0:22 | | | 660 | |
| 0:35 | | | 1,100 | |
| 0:45 | | | 1,900 | |
| 0:55 | | | 2,420 | |
| 1:00 | 448 | | | |
| 1:05 | | | 29,200 | > 100,000 |
| 1:15 | 930 | | | |
| 1:20 | 1,190 | | | |
| 1:30 | 2,390 | | | |
| 1:35 | 3,420 | > 100,000 | | |
| 1:40 | | | 3,960 | |
| 1:50 | 3,920 | (gelled) | | |
| 2:00 | (motor burned) | | 39,900 | (gelled) |

### Definitions

By "mer unit" is meant herein a segment of a polymer derived from a monomeric specie that contains two backbone carbons.

"Versene" is a trademark of the Dow Chemical Corporation for a series of chelating agents based on ethylenediaminetetraacetic acid, and it is included in the polymerizations described in the Examples and Comparative Examples hereof as a monomer stabilizer. The specific Versene chelating agent used in the Examples and Comparative Examples was Versene 50®.

The polymer(s) employed in the present process and the polymer prepared thereby are water-soluble. The degree of water solubility required of a polymer to be considered a water-soluble polymer can of course vary among the technical fields in which polymers are used. The degree of water solubility of an array of polymers might be defined in terms of the water solubilities of their monomers, the mole ratios of these monomers, the extent of any cross-linking or mer unit interactions, their conformations, their charge densities, their weight average molecular weights, their intrinsic viscosities, their reduced specific viscosities and combinations of these and like parameters. Defining a degree of water solubility of a class of polymers by one or more of such parameters at times may be cumbersome and of little value in those instances when the parameter(s) in issue are not known. For purposes of the present invention the degree of water solubility possessed by polymers described herein as "water-soluble" is preferably defined in terms of the viscosity of its aqueous solutions, regardless of whether or not the polymer is used in an aqueous solution. By "water-soluble polymer" is meant herein, and is understood generally in the water-treatment field, that an aqueous solution of the polymer having a neutral pH value within the range of about 6 to about 7.5, at a polymer actives concentration no lower than about 0.5 or 1 weight percent, is reasonably fluid, and preferably has a viscosity of no more than about 5,000 to 20,000 mPa·s (cps Brookfield), at ambient room temperature (from about 23 to about 26 °C.). Such water solubility characteristic generally does not create a molecular weight or Intrinsic Viscosity ceiling because even acrylamide homopolymers, substantially free of any electrolytic groups, meet such a standard at the high molecular weights that can now be provided by conventional synthesis techniques, provided the polymer is substantially linear.

By the general terminology "soluble" is meant herein that a specie(s) is soluble in the respective fluid designated at least to the degree of its concentration as used therein in the application of the present invention.

Unless expressly indicated otherwise herein, the inclusion of a prefix or suffix in parenthesis designates the word with such prefix or suffix as an alternative. For example, "polymer(s)" means "polymer and/or polymers", "(meth)acrylamide" means "acrylamide and/or methacrylamide".

There is no need generally for the inclusion of any conventional surface active agent, such as a surfactant or detergent, in the process of the present invention for purposes of forming and/or retaining the polymer dispersion form. No such agent would generally be added except possibly as a post-polymerization addition for stabilization of the polymer dispersion, for instance upon dilution or in contemplation of destabilizing environmental impacts, and a post-polymerization stabilization with a conventional surface active agent would nonetheless be an unpreferred embodiment of the present invention. The terminologies "conventional surface active agent", "conventional surfactant" "surface active agent" and "surfactant" as used herein, and as generally understood in the present technical field, means a relatively low molecular weight chemical specie that has distinct hydrophilic and hydrophobic sections. Such agents are generally not polymeric except for sections thereof that have repeating alkoxy units, such as polyethylene oxide or polypropylene oxide sections. While a very broad definition of surface active agent may in some instances include polymers such as the water-soluble polymers used in the present invention, the terminology of conventional surface active agent does not include such polymers. As a generality, one can distinguish such species by molecular weight, and conventional surface active agents would not have molecular weight approaching 500,000, and even a molecular weight ceiling of 100,000, or 50,000, would be excessively high to define such agents. In preferred embodiment the polymerization reaction mixture used in the present invention does not include any surface active agent of less than 50,000 molecular weight other than the water-soluble polymers required to form and maintain the polymer dispersion form.

Unless expressly indicated otherwise herein, percentages are percentages by weight and solutions are aqueous solutions.

## Claims

1. A process for preparing a water-continuous dispersion of a water-soluble polymer that has not only a low end-product viscosity and permits rapid dissolution of the polymer in water but also provides control over the peak-in production viscosity parameter, the process comprising
polymerizing a water-soluble monomer in an aqueous reaction mixture, containing a polyvalent anionic salt, at least one polymeric dispersant, optionally a low molecular weight polyhydric organic alcohol and optionally a preformed polymer seed,
wherein said water-soluble monomer, said polyvalent anionic salt, said polymeric dispersant and said polyhydric organic alcohol, if any, are solutes of said aqueous reaction mixture, and said preformed polymer seed, if any, is insoluble in said aqueous reaction mixture,
wherein the water-soluble polymer formed during said polymerization is insoluble in the aqueous reaction mixture at the concentration thereof formed during the polymerization, and
wherein a portion of said monomer is fed to said aqueous reaction mixture after said polymerization reaction has been initiated.

2. The process of claim 1 wherein at least 5 weight percent of said water-soluble monomer is present in said aqueous reaction mixture when said polymerization is initiated, the remainder of said monomer being added to said aqueous reaction mixture during said polymerization.

3. The process of claim 1 or 2 wherein said water-soluble polymer formed during said polymerization has a weight average molecular weight of at least about 1,000.

4. The process of any of claims 1 to 3 wherein the concentration of said water-soluble monomer in said aqueous reaction mixture at the time said polymerization process is initiated is from 3 to 30 weight percent based on the total weight of said aqueous reaction mixture at the time of said polymerization, and
wherein the remainder of said monomer is added to said reaction mixture within the first half of the total polymerization reaction time period.

5. The process of any of claims 1 to 4 comprising
polymerizing said water-soluble monomer feed in an aqueous solution of said polyvalent anionic salt in the presence of a water-soluble polymeric dispersant which is soluble in said aqueous solution of a polyvalent anionic salt;
wherein the conditions of said polymerization are sufficient to polymerize said monomer feed to a water-soluble polymer that is insoluble in said aqueous solution of a polyvalent anionic salt; and
wherein only a portion of said monomer feed is present in said aqueous solution of a polyvalent anionic salt when said polymerization is initiated, the remainder of said monomer feed being added to said aqueous solution of polyvalent anionic salt during said polymerization process, and
wherein said water-soluble polymeric dispersant and water-soluble polymer prepared by said polymerization process are both cationic polymers.

6. The process of claim 5 wherein at least 5 weight percent of said monomer feed is present in said aqueous solution of a polyvalent anionic salt at the time polymerization thereof is initiated, and at least 15 weight percent of said monomer feed is added to said aqueous solution of polyvalent anionic salt during said polymerization process.

7. The process of claim 5 or 6 wherein said aqueous solution of polyvalent anionic salt contains at least a polymer-insolubility-threshold concentration of said monomer feed at the time said polymerization process is initiated whereby a concentration of said monomer feed that is equivalent to at least the minimum concentration of said monomer feed's polymeric reaction product at which precipitation of said polymeric reaction product will be seen in said environment of said aqueous solution of a polyvalent anionic salt at the time of said polymerization initiation.

8. The process of any of claims 5 to 7 wherein said reaction mixture contains at least 3 weight percent of said monomer feed at the time said polymerization is initiated.

9. The process of any of claims 7 or 8 wherein said concentration of said monomer in said aqueous solution of a polyvalent anionic salt at the time of polymerization initiation is from n to 20 n, wherein n is said polymer-insolubility-threshold concentration for such monomer feed in said reaction mixture.

10. The process of any of claims 5 to 9 wherein said portion monomer feed added to said aqueous solution of a polyvalent anionic salt after said initiation of said polymerization is added within the first half of the total polymerization reaction time period and is fully added within a time period of from 0.025 m to 0.25 m, wherein m is said total time period of said polymerization reaction.

11. The process of any of claims 1 to 10 for preparing a water-continuous dispersion of a water-soluble cationic polymer by polymerizing a water-soluble monomer feed to form a water-soluble cationic polymer in an aqueous polymerization mixture in which said water-soluble cationic polymer is not fully soluble, comprising:
feeding said water-soluble monomer to said polymerization reaction mixture by a first and a second technique,
said first technique being a batch technique comprising the addition of a portion of said water-soluble monomer to said aqueous polymerization mixture as an initial monomer feed before polymerization is initiated,
said second technique being a post-initiation technique whereby a portion of said water-soluble monomer is added to said aqueous polymerization mixture as a post-initiation monomer feed,
initiating said polymerization at a time when said initial monomer feed is present in said aqueous polymerization mixture,
wherein said aqueous polymerization mixture is comprised of an aqueous solution of a polyvalent anionic salt,
wherein said polymerization is carried out in said presence of a water-soluble cationic polymer which is soluble in said aqueous solution of a polyvalent anionic salt,
continuing said polymerization during the time said post-initiation monomer feed is added to said polymerization reaction mixture, and
terminating said polymerization when at least about 95 weight percent of said monomer has been converted to polymer.

12. The process of claim 11 wherein a polyhydric alcohol in the amount of from 0 to 10 parts by weight per hundred parts by weight of said total monomer feed is present in said aqueous polymerization mixture when polymerization is initiated.

13. The process of claim 11 oder 12 wherein said polyvalent anionic salt is present throughout said aqueous polymerization mixture in an amount of from 15 to 20 percent by weight based on the total weight of said reaction mixture at any given point during said polymerization reaction.

14. The process of any of claims 11 to 13 wherein said polymeric dispersant is present in said aqueous polymerization mixture in an amount of from 2 to 10 parts by weight per 100 parts by weight of said total monomers feed, and has a weight average molecular weight of at least about 50,000.

15. The process of any of claims 11 to 14 wherein said water-soluble monomer feed contains at least 5 mole percent of a cationic monomer of formula I 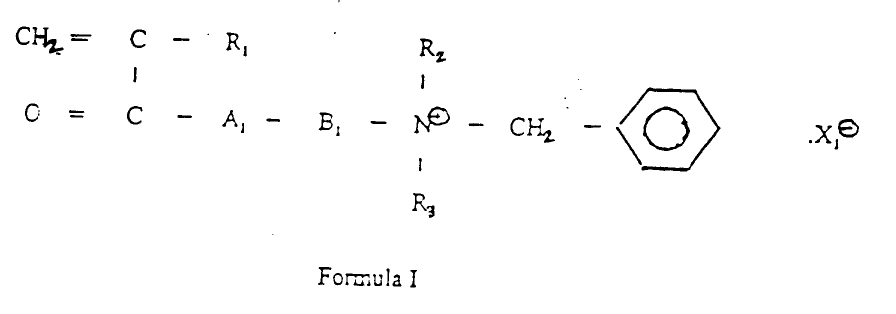 wherein
R₁ is H or CH₃;
R₂ and R₃ are each independently an alkyl group having 1 or 2 carbon atoms;
A₁ is an oxygen atom or NH;
B₁ is an alkylene group having from 2 to 4 carbon atoms or a hydroxypropylene group and
X₁^{⊖} is a counter anion.

16. The process of any of claims 11 to 15 wherein said polymeric dispersant is present in said aqueous polymerization mixture in an amount of from 2 to 10 parts by weight per 100 parts by weight of said water-soluble monomer feed.

17. The process of any of claims 11 to 16 wherein said monomer feed is comprised of at least 5 mole percent of cationic monomer of said formula I and the balance of said monomer is acrylamide, methacrylamide, a cationic monomer other than said cationic monomer of said formula I or combinations thereof.

18. The process of any of claims 11 to 17 wherein said polymeric dispersant is comprised of at least 20 mole percent of cationic mer units.

19. The process of any of claims 11 to 18 wherein said polymeric dispersant contains at least 20 mole percent of cationic mer units represented by formula IIa 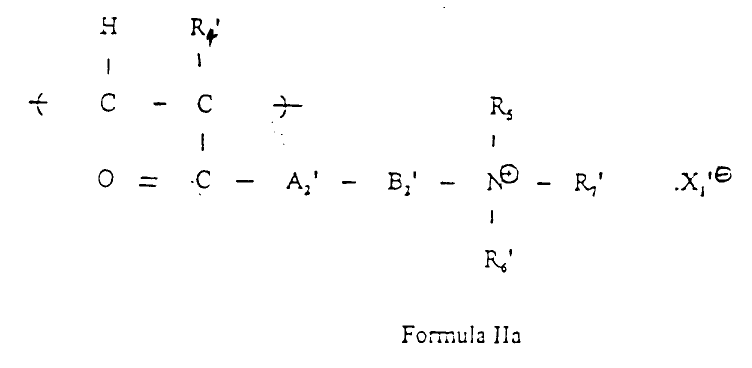 wherein
R₄' is H oder CH₃;
R₅' und R₆' are each an alkyl group having 1 or 2 carbon atoms;
R₇' is a hydrogen atom or an alkyl group having 1 to 2 carbon atoms;
A₂' is an oxygen atom or NH;
B₂' is an alkylene group having from 2 to 4 carbon atoms or a hydroxypropylene group and
X₁'^{⊖} is a counter anion.

20. The process of any of claims 11 to 19 wherein said monomer feed is from 15 to 45 percent by weight based on the total weight of said polymerization reaction mixture at the time said polymerization is terminated, excluding post-polymerization additives.

## Patentansprüche

1. Verfahren zur Herstellung einer Dispersion eines wasserlöslichen Polymers in Wasser als kontinuierlicher Phase, wobei das Polymer nicht nur eine niedrige Endprodukt-Viskosität aufweist und die schnelle Auflösung des Polymers in Wasser erlaubt, sondern auch den Spitzenwert des Viskositätsparameters während der Bildung kontrolliert, wobei das Verfahren umfaßt
das Polymerisieren eines wasserlöslichen Monomers in einer wäßrigen Reaktionsmischung, die ein polyvalentes anionisches Salz, mindestens ein polymeres Dispergiermittel, gegebenenfalls einen organischen Polyhydroxyalkohol mit niedrigem Molekulargewicht und gegebenenfalls einen vorher gebildeten Polymer-Impfkeim enthält,
wobei das genannte wasserlösliche Monomer, das genannte polyvalente anionische Salz, das genannte polymere Dispergiermittel und der genannte organische Polyhydroxyalkohol, falls vorhanden, in der genannten wäßrigen Reaktionsmischung gelöste Stoffe sind und der genannte, vorher gebildete Polymer-Impfkeim, falls vorhanden, in der genannten wäßrigen Reaktionsmischung unlöslich ist,
wobei das während der Polymerisation gebildete wasserlösliche Polymer in der wäßrigen Reaktionsmischung bei der Konzentration, in der es während der Polymerisation gebildet wird, unlöslich ist und
wobei ein Teil des genannten Monomers der genannten wäßrigen Reaktionsmischung zugeführt wird, nachdem die Polymerisationsreaktion initiiert worden ist.

2. Verfahren nach Anspruch 1, wobei mindestens 5 Gew.-% des genannten wasserlöslichen Monomers in der genannten wäßrigen Reaktionsmischung vorliegen, wenn die Polymerisation initiiert wird, und der Rest des genannten Monomers der wäßrigen Reaktionsmischung während der Polymerisation zugegeben wird.

3. Verfahren nach Anspruch 1 oder 2, worin das genannte, während der Polymerisation gebildete wasserlösliche Polymer ein gewichtsdurchschnittliches Molekulargewicht von mindestens etwa 1000 aufweist.

4. Verfahren nach einem der Ansprüche 1 bis 3, worin die Konzentration des genannten wasserlöslichen Monomers in der genannten wäßrigen Reaktionsmischung zu dem Zeitpunkt, zu dem der Polymerisations-Prozeß initiiert wird, 3 bis 30 Gew.-% beträgt, bezogen auf das Gesamtgewicht der wäßrigen Reaktionsmischung zum Zeitpunkt der Polymerisation, und
der Rest des genannten Monomers der genannten Reaktionsmischung innerhalb der ersten Hälfte der gesamten Polymerisations-Reaktionsperiode zugegeben wird.

5. Verfahren nach einem der Ansprüche 1 bis 4, das umfaßt
das Polymerisieren der genannten wasserlöslichen Monomer-Beschickung in einer wäßrigen Lösung des genannten polyvalenten anionischen Salzes in Gegenwart eines wasserlöslichen polymeren Dispergiermittels, das in der genannten wäßrigen Lösung eines polyvalenten anionischen Salzes löslich ist;
wobei die Bedingungen der Polymerisation ausreichen, um die genannte Monomer-Beschickung zu polymerisieren unter Bildung eines wasserlöslichen Polymers, das in der genannten wäßrigen Lösung eines polyvalenten anionischen Salzes unlöslich ist; und
wobei nur ein Teil der genannten Monomer-Beschickung in der genannten wäßrigen Lösung eines polyvalenten anionischen Salzes vorliegt, wenn die genannte Polymerisation initiiert wird, und der Rest der genannten Monomer-Beschickung der genannten wäßrigen Lösung des polyvalenten anionischen Salzes während des Polymerisationsprozesses zugegeben wird,
wobei das genannte wasserlösliche polymere Dispergiermittel und das wasserlösliche Polymer, das durch den genannten Polymerisations-Prozeß hergestellt wird, beide kationische Polymere sind.

6. Verfahren nach Anspruch 5, worin mindestens 5 Gew.-% der genannten Monomer-Beschickung in der genannten wäßrigen Lösung eines polyvalenten anionischen Salzes zu dem Zeitpunkt vorliegen, zu dem die Polymerisation derselben initiiert wird, und mindestens 15 Gew.-% der genannten Monomer-Beschickung der genannten wäßrigen Lösung des polyvalenten anionischen Salzes während des Polymerisationsprozesses zugegeben werden.

7. Verfahren nach Anspruch 5 oder 6, worin die genannte wäßrige Lösung des polyvalenten anionischen Salzes mindestens eine Polymer-UnlöslichkeitsSchwellenwert-Konzentration der genannten Monomer-Beschickung zu dem Zeitpunkt, zu dem der Polymerisationsprozeß initiiert wird, und dadurch eine Konzentration der genannten Monomer-Beschickung enthält, die mindestens der Minimal-Konzentration der Monomer-Beschickung in dem polymeren Reaktionsprodukt entspricht, bei der eine Ausfällung des genannten polymeren Reaktionsprodukts in der Umgebung der genannten wäßrigen Lösung eines polyvalenten anionischen Salzes zum Zeitpunkt der Initiierung der Polymerisation sichtbar wird.

8. Verfahren nach einem der Ansprüche 5 bis 7, worin die genannte Reaktionsmischung mindestens 3 Gew.-% der genannten Monomer-Beschickung zu dem Zeitpunkt enthält, zu dem die Polymerisation initiiert wird.

9. Verfahren nach einem der Ansprüche 7 oder 8, worin die genannte Konzentration des genannten Monomers in der genannten wäßrigen Lösung eines polyvalenten anionischen Salzes zum Zeitpunkt der Initiierung der Polymerisation n bis 20 n beträgt, wobei n die Polymer-Unlöslichkeits-Schwellenwert-Konzentration für eine solche Monomer-Beschickung in der genannten Reaktionsmischung ist.

10. Verfahren nach einem der Ansprüche 5 bis 9, worin der genannte Anteil der Monomer-Beschickung, welcher der genannten wäßrigen Lösung eines polyvalenten anionischen Salzes zugegeben wird, nachdem die Initiierung der Polymerisation durchgeführt worden ist, innerhalb der ersten Hälfte der gesamten Polymerisations-Reaktionszeit zugegeben wird und innerhalb eines Zeitraums von 0,025 m bis 0,25 m vollständig zugegeben wird, wobei m die gesamte Reaktionsdauer für die Polymerisationsreaktion ist.

11. Verfahren nach einem der Ansprüche 1 bis 10 zur Herstellung einer Dispersion eines wasserlöslichen kationischen Polymers in Wasser als kontinuierlicher Phase durch Polymerisieren einer wasserlöslichen Monomer-Beschickung unter Bildung eines wasserlöslichen kationischen Polymers in einer wäßrigen Polymerisationsmischung, in der das genannte wasserlösliche kationische Polymer nicht vollständig löslich ist, wobei das Verfahren umfaßt:
die Zuführung des genannten wasserlöslichen Monomers zu der genannten Polymerisationsreaktionsmischung nach einer ersten und einer zweiten Methode,
wobei die genannte erste Methode eine Batch-Methode ist, die umfaßt die Zugabe eines Teils des genannten wasserlöslichen Monomers zu der genannten wäßrigen Polymerisationsmischung als anfängliche Monomer-Beschickung, bevor die Polymerisation initiiert wird, und
die zweite Methode eine Methode nach der Initiierung ist, wodurch ein Teil des genannten wasserlöslichen Monomers der genannten wäßrigen Polymerisationsmischung als Monomer-Beschickung nach der Initiierung zugegeben wird, das Initiieren der Polymerisation zu dem Zeitpunkt, wenn die genannte anfängliche Monomer-Beschickung in der genannten wäßrige Polymerisationsmischung vorliegt,
wobei die genannte wäßrige Polymerisationsmischung aus einer wäßrigen Lösung eines polyvalenten anionischen Salzes besteht,
die genannte Polymerisation in Gegenwart eines wasserlöslichen kationischen Polymers durchgeführt wird, das in der genannten wäßrigen Lösung eines polyvalenten anionischen Salzes löslich ist,
die genannte Polymerisation während der Zeit, während der die Monomer-Beschickung nach der Initiierung zu der genannten Polymerisationsreaktionsmischung zugegeben wird, fortgesetzt wird, und
die Polymerisation beendet wird, wenn mindestens etwa 95 Gew.-% des Monomers in das Polymer umgewandelt worden sind.

12. Verfahren nach Anspruch 11, worin ein Polyhydroxyalkohol in einer Menge von 0 bis 10 Gew.-Teilen auf 100 Gew.-Teile der gesamten Monomer-Beschickung in der genannten wäßrigen Polymerisationsmischung vorhanden ist, wenn die Polymerisation initiiert wird.

13. Verfahren nach Anspruch 11 oder 12, worin das genannte polyvalente anionische Salz innerhalb der gesamten wäßrigen Polymerisationsmischung in einer Menge von 15 bis 20 Gew.-%, bezogen auf das Gesamtgewicht der Reaktionsmischung, zu einem gegebenen Zeitpunkt während der Polymerisationsreaktion vorliegt.

14. Verfahren nach einem der Ansprüche 11 bis 13, worin das genannte polymere Dispergiermittel in der genannten wäßrigen Polymerisationsmischung in einer Menge von 2 bis 10 Gew.-Teilen auf 100 Gew.-Teile der gesamten Monomer-Beschickung vorliegt und ein gewichtsdurchschnittliches Molekulargewicht von mindestens etwa 50 000 aufweist.

15. Verfahren nach einem der Ansprüche 11 bis 14, worin die genannte wasserlösliche Monomer-Beschickung mindestens 5 Mol-% eines kationischen Monomers der Formel (I) enthält 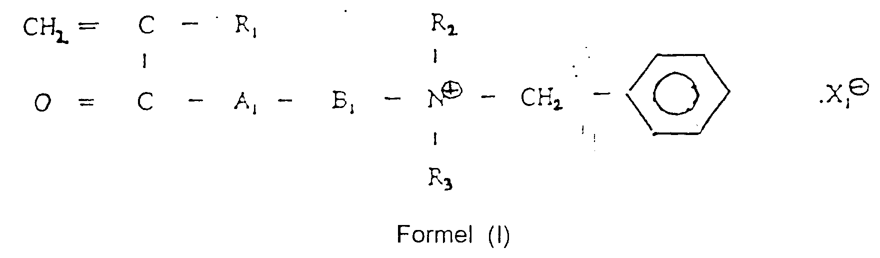 worin bedeuten:
R₁ H oder CH₃;
R₂ und R₃ jeweils unabhängig voneinander eine Alkylgruppe mit 1 oder 2 Kohlenstoffatomen;
A₁ ein Sauerstoffatom oder NH;
B₁ eine Alkylengruppe mit 2 bis 4 Kohlenstoffatomen oder eine Hydroxypropylengruppe und
X₁^{⊖} ein Gegenanion.

16. Verfahren nach einem der Ansprüche 11 bis 15, worin das genannte polymere Dispergiermittel in der genannten wäßrigen Polymerisationsmischung in einer Menge von 2 bis 10 Gew.-Teilen auf 100 Gew.-Teile der genannten wasserlöslichen Monomer-Beschickung vorliegt.

17. Verfahren nach einem der Ansprüche 11 bis 16, worin die genannte Monomer-Beschickung aus mindestens 5 Mol-% des kationischen Monomers der genannten Formel (I) besteht und der Rest der genannten Monomer-Beschickung aus Acrylamid, Methacrylamid, einem von dem genannten kationischen Monomer der Formel (I) verschiedenen kationischen Monomer oder Kombinationen davon besteht.

18. Verfahren nach einem der Ansprüche 11 bis 17, worin das genannte polymere Dispergiermittel aus mindestens 20 Mol-% kationischen Mer-Einheiten besteht.

19. Verfahren nach einem der Ansprüche 11 bis 18, worin das genannte polymere Dispergiermittel mindestens 20 Mol-% kationische Mer-Einheiten der Formel (IIa) enthält: 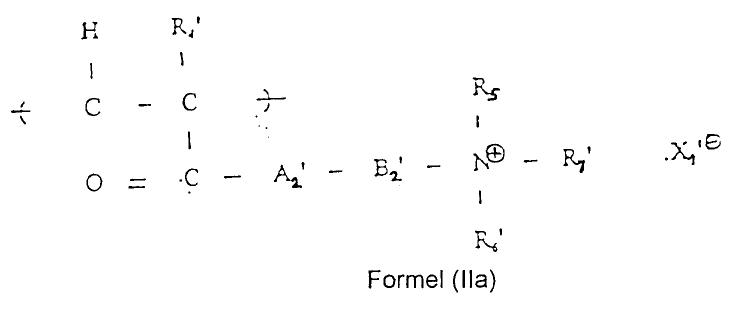 worin bedeuten:
R₄' H oder CH₃;
R₅' und R₆' jeweils eine Alkylgruppe mit 1 oder 2 Kohlenstoffatomen;
R₇' ein Wasserstoffatom oder eine Alkylgruppe mit 1 bis 2 Kohlenstoffatomen;
A₂' ein Sauerstoffatom oder NH;
B₂' eine Alkylengruppe mit 2 bis 4 Kohlenstoffatomen oder eine Hydroxypropylengruppe und
X₁'^{⊖} ein Gegenanion.

20. Verfahren nach einem der Ansprüche 11 bis 19, worin die genannte Monomer-Beschickung 15 bis 45 Gew.-% des Gesamtgewichts der Polymerisationsreaktionsmischung zum Zeitpunkt der Beendigung der Polymerisation, ausgenommen die Zusätze nach der Polymerisation, ausmacht .

## Revendications

1. Procédé pour la préparation d'une dispersion dans de l'eau en tant que phase continue d'un polymère soluble dans l'eau, le polymère présentant non seulement une basse viscosité de produit final et permettant une dissolution rapide du polymère dans l'eau, mais contrôlant également la valeur de pointe du paramètre de viscosité lors de la formation, le procédé comprenant
la polymérisation d'un monomère soluble dans l'eau dans un mélange aqueux de réaction comprenant un sel anionique polyvalent, au moins un agent dispersant polymère, éventuellement un polyalcool organique avec un bas poids moléculaire, et éventuellement un germe de polymère préformé,
ledit monomère soluble dans l'eau, ledit sel anionique polyvalent, ledit agent dispersant polymère et ledit polyalcool organique, si présent, étant des solutés dudit mélange aqueux de réaction, et ledit germe de polymère préformé, si présent, étant insoluble dans ledit mélange aqueux de réaction,
le polymère soluble dans l'eau formé au cours de ladite polymérisation étant insoluble dans le mélange aqueux de réaction à la concentration du polymère formée au cours de la polymérisation, et
une portion dudit monomère étant ajoutée audit mélange aqueux de réaction après l'initiation de ladite réaction de polymérisation.

2. Procédé selon la revendication 1, dans lequel au moins 5% en poids dudit monomère soluble dans l'eau sont présents dans ledit mélange aqueux de réaction lorsque ladite polymérisation est initiée, le restant dudit monomère étant additionné audit mélange aqueux de réaction au cours de ladite polymérisation.

3. Procédé selon la revendication 1 ou 2, dans lequel ledit polymère soluble dans l'eau formé au cours de ladite polymérisation a un poids moléculaire moyen pondéral d'au moins environ 1000.

4. Procédé selon l'une quelconque des revendications 1 à 3, dans lequel la concentration dudit monomère soluble dans l'eau dans ledit mélange aqueux de réaction au moment où ledit procédé de polymérisation est initié range de 3 à 30% en poids par rapport au poids total dudit mélange aqueux de réaction au moment de ladite polymérisation, et
dans lequel le restant dudit monomère est ajouté audit mélange de réaction pendant la première moitié de la période totale de réaction de polymérisation.

5. Procédé selon l'une quelconque des revendications 1 à 4, comprenant la polymérisation de ladite charge en monomère soluble dans l'eau dans une solution aqueuse dudit sel anionique polyvalent en présence d'un dispersant polymère soluble dans l'eau qui est soluble dans ladite solution d'un sel anionique polyvalent;
dans lequel les conditions de ladite polymérisation sont suffisantes pour polymériser ladite charge en monomère en un polymère soluble dans l'eau qui est insoluble dans ladite solution aqueuse d'un sel anionique polyvalent; et
dans lequel seulement une portion de ladite charge en monomère est présente dans ladite solution aqueuse d'un sel anionique polyvalent lorsque ladite polymérisation est initiée, le restant de ladite charge en monomère étant ajouté à ladite solution aqueuse d'un sel anionique polyvalent pendant ledit procédé de polymérisation, et
dans lequel ledit dispersant polymère soluble dans l'eau et ledit polymère soluble dans l'eau formé par ledit procédé de polymérisation sont tous les deux des polymères cationiques.

6. Procédé selon la revendication 5, dans lequel au moins 5% en poids de ladite charge en monomère sont présents dans ladite solution aqueuse d'un sel anionique polyvalent au moment où sa polymérisation est initiée, et au moins 15% en poids de ladite charge en monomère sont ajoutés à ladite solution aqueuse d'un sel anionique polyvalent pendant ce procédé de polymérisation.

7. Procédé selon la revendication 5 ou 6, dans lequel ladite solution aqueuse d'un sel anionique polyvalent contient au moins une concentration de seuil de l'insolubilité du polymère de ladite charge en monomère au moment où ledit procédé de polymérisation est initié, par laquelle une concentration de ladite charge en monomère est présente, qui correspond à au moins la concentration minimale du produit de réaction polymère de ladite charge en monomère lors de laquelle une précipitation dudit produit de réaction polymère apparaît dans ledit environnement de ladite solution aqueuse d'un sel anionique polyvalent au moment de l'initiation de la polymérisation.

8. Procédé selon l'une quelconque des revendications 5 à 7, dans lequel ledit mélange de réaction contient au moins 3% en poids de ladite charge en monomère au moment de l'initiation de ladite polymérisation.

9. Procédé selon l'une quelconque des revendications 7 ou 8, dans lequel ladite concentration dudit monomère dans ladite solution aqueuse d'un sel anionique polyvalent au moment de l'initiation de la polymérisation est de n à 20 n, n étant ladite concentration de seuil de l'insolubilité du polymère pour une telle charge en monomère dans ledit mélange de réaction.

10. Procédé selon l'une quelconque des revendications 5 à 9, dans lequel ladite portion de charge en monomère ajoutée à ladite solution aqueuse d'un sel anionique polyvalent après ladite initiation de ladite polymérisation est ajoutée pendant la première moitié de la période totale de réaction de polymérisation et est ajoutée au total pendant une période de 0,025 m à 0,25 m, m étant ladite période totale de ladite réaction de polymérisation.

11. Procédé selon l'une quelconque des revendications 1 à 10 pour la préparation d'une dispersion dans de l'eau en tant que phase continue d'un polymère cationique soluble dans l'eau en polymérisant une charge en monomère soluble dans l'eau pour former un polymère cationique soluble dans l'eau dans un mélange aqueux de polymérisation, dans lequel ledit polymère cationique soluble dans l'eau n'est pas complètement soluble, le procédé comprenant:
l'addition dudit monomère soluble dans l'eau audit mélange de réaction de polymérisation selon une première et une deuxième technique,
ladite première technique étant une technique de traitement par lots (batch) qui comprend l'addition d'une portion dudit monomère soluble dans l'eau audit mélange de polymérisation soluble dans l'eau en tant que charge initiale de monomère avant l'initiation de la polymérisation, et
la deuxième technique étant une technique après l'initiation, selon laquelle une portion dudit monomère soluble dans l'eau est ajoutée audit mélange aqueux de polymérisation en tant que charge en monomère après l'initiation,
l'initiation de la polymérisation au moment où ladite charge initiale de monomère est présente dans ledit mélange aqueux de polymérisation, ledit mélange aqueux de polymérisation étant constitué par une solution aqueuse d'un sel anionique polyvalent,
ladite polymérisation étant effectuée en présence d'un polymère cationique soluble dans l'eau qui est soluble dans ladite solution aqueuse d'un sel anionique polyvalent,
ladite polymérisation étant continuée durant la période de temps pendant laquelle la charge en monomère après initiation est ajoutée audit mélange de réaction de polymérisation, et
la polymérisation étant terminée lorsqu'au moins environ 95% en poids du monomère ont été convertis en polymère.

12. Procédé selon la revendication 11, dans lequel un polyalcool est présent dans une quantité de 0 à 10 parts en poids par rapport à 100 parts de ladite charge totale de monomère dans ledit mélange aqueux de polymérisation lorsque la polymérisation est initiée.

13. Procédé selon la revendication 11 ou 12, dans lequel ledit sel anionique polyvalent est présent partout dans le mélange aqueux de polymérisation dans une quantité de 15 à 20% en poids par rapport au poids total dudit mélange de réaction à n'importe quel moment donné durant ladite réaction de polymérisation.

14. Procédé selon l'une des revendications 11 à 13, dans lequel ledit agent dispersant polymère est présent dans ledit mélange aqueux de polymérisation dans une quantité de 2 à 10 parts en poids par rapport à 100 parts en poids de la charge totale de monomère et a un poids moléculaire moyen pondéral d'au moins environ 50 000.

15. Procédé selon l'une quelconque des revendications 11 à 14, dans lequel ladite charge en monomère soluble dans l'eau contient au moins 5% en poids moléculaire d'un monomère cationique de la formule (I): 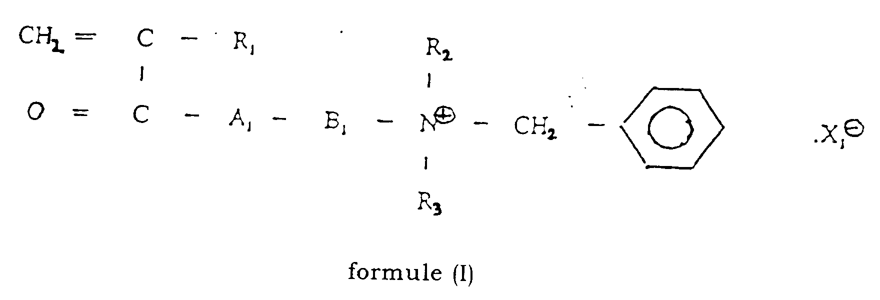 dans laquelle
R₁ est H ou CH₃,
R₂ et R₃ sont chacun indépendamment un groupe alkyle avec 1 ou 2 atomes de carbone,
A₁ est un atome d'oxygène ou NH,
B₁ est un groupe alkylène avec 2 à 4 atomes de carbone ou un groupe hydroxypropylène et
X₁^{⊖} est un contre-anion.

16. Procédé selon l'une quelconque des revendications 11 à 15, dans lequel ledit dispersant polymère est présent dans ledit mélange aqueux de polymérisation dans une quantité de 2 à 10 parts en poids par rapport à 100 parts en poids de ladite charge en monomère soluble dans l'eau.

17. Procédé selon l'une quelconque des revendications 11 à 16, dans lequel ladite charge en monomère consiste en au moins 5% en poids moléculaire de monomère cationique de ladite formule I et le restant dudit monomère est constitué par l'acrylamide, le méthacrylamide, un monomère cationique différent dudit monomère cationique de la formule (I) ou leurs combinaisons.

18. Procédé selon l'une quelconque des revendications 11 à 17, dans lequel ledit dispersant polymère est constitué par au moins 20% de poids moléculaire d'unités -mères cationiques (cationic mer units).

19. Procédé selon l'une quelconque des revendications 11 à 18, dans lequel ledit dispersant polymère contient au moins 20% en poids moléculaire d'unités -mères cationiques représentées par la formule IIa 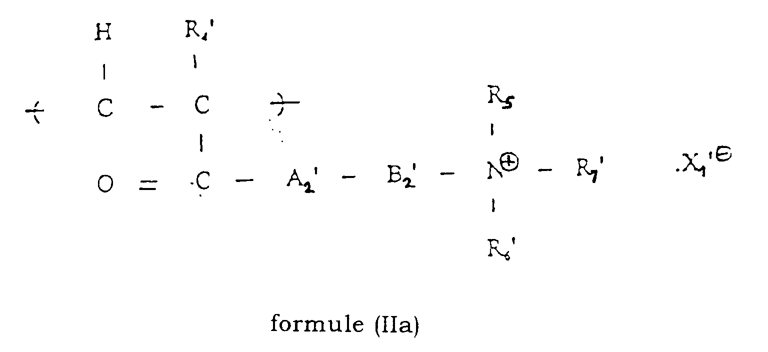 dans laquelle
R₄' est H ou CH₃
R₅' et R₆' sont chacun un groupe alkyle ayant 1 ou 2 atomes de carbone,
R₇' est un atome d'hydrogène ou un groupe alkyle ayant 1 à 2 atomes de carbone,
A₂' est un atome d'oxygène ou NH,
B₂' est un groupe alkyle ayant 2 à 4 atomes de carbone ou un groupe hydroxypropylène et
X₁'^{⊖} est un contre-anion.

20. Procédé selon l'une quelconque des revendications 11 à 19, dans lequel ladite charge en monomère est de 15 à 45% en poids par rapport au poids total dudit mélange de réaction de polymérisation au moment où ladite polymérisation est terminée, excluant des additifs après polymérisation.
